(19) Europäisches Patentamt
European Patent Office
Office européen des brevets

(11) **EP 1 730 628 B1**

(12) **EUROPEAN PATENT SPECIFICATION**

(45) Date of publication and mention
of the grant of the patent:
**26.12.2018 Bulletin 2018/52**

(51) Int Cl.:
***G06F 9/38*** *(2018.01)*   ***G06F 15/80*** *(2006.01)*
***G06F 15/78*** *(2006.01)*

(21) Application number: **05729094.2**

(22) Date of filing: **30.03.2005**

(86) International application number:
**PCT/GB2005/001154**

(87) International publication number:
**WO 2005/096143 (13.10.2005 Gazette 2005/41)**

(54) **RESOURCE MANAGEMENT IN A MULTICORE ARCHITECTURE**

VERWALTUNG VON RESSOURCEN IN EINER MEHRKERNARCHITEKTUR

GESTION DE RESSOURCES DANS UNE ARCHITECTURE MULTICOEUR

(84) Designated Contracting States:
**DE FR GB IT**

(30) Priority: **31.03.2004 GB 0407384**

(43) Date of publication of application:
**13.12.2006 Bulletin 2006/50**

(73) Proprietors:
• **Fujitsu Semiconductor Limited
Yokohama-shi
Kanagawa 222-0033 (JP)**
• **Synopsys, Inc.
Mountain View, CA 94043 (US)**

(72) Inventor: **LIPPETT, Mark David
Watlington
OX49 5DN (GB)**

(74) Representative: **Boult Wade Tennant LLP
Verulam Gardens
70 Gray's Inn Road
London WC1X 8BT (GB)**

(56) References cited:
**GB-A- 2 206 714   US-A- 5 504 670**

• **ARISON D ET AL: "System Applications Of A New 32-Bit Floating-point DSP Processor" 22ACSSC - 12/88, vol. 2, 31 October 1988 (1988-10-31), pages 890-897, XP010325160**
• **KASAHARA H ET AL: "Parallel processing of near fine grain tasks using static scheduling on OSCAR (optimally scheduled advanced multiprocessor)" PROCEEDINGS OF THE SUPERCOMPUTING CONFERENCE. NEW YORK, NOV. 12 - 16, 1990, WASHINGTON, IEEE COMP. SOC. PRESS, US, vol. CONF. 3, 12 November 1990 (1990-11-12), pages 856-864, XP010020006 ISBN: 0-8186-2056-0**

**Description**

This invention relates to a method and apparatus for resource management in a multicore architecture.

Today, semiconductor devices incorporating complex heterogeneous multicore architectures are put to use in a wide variety of systems and devices, from the ubiquitous desktop computer, to the latest in modern electronic devices, such as mobile telephones, Personal Digital Assistants and high speed telecoms or network switching equipment.

Whatever the intended use of any computer processor, the processor manufacturers continue to strive to increase the performance of current processors, whilst maintaining or reducing their unit "cost".

The "cost" of a processor can be measured using a variety of parameters. Although in many cases, the cost will be a purely financial one, in many applications, especially in the embedded processor market, the cost calculation also includes ancillary considerations such as power consumption, cooling requirements, efficiency and time to bring to market.

The absolute capacity for any processor to perform useful functions may be characterised in terms of the MIPS (millions of instruction per second) ratio achievable, and thus the "price-performance" ratio of any processor may be characterised in terms of the MIPS/mm$^2$, MIPS/\$, or MIPS/mW, for example.

In practice however, not all instructions achieve the same amount of useful work, therefore "pure" MIPS ratings are not easily comparable. Thus, while a Digital Signal Processor (DSP) is well suited to solving the mathematically intensive processing near the wireless interface of a mobile phone, it is very inefficient at running the web browser that runs on the phone's screen. Effectively this means that processors can be more usefully classified in terms of "application available" price-performance.

Furthermore, an additional reduction in the effective performance can be caused by the inefficiency of the programming, i.e. software, tools that must be used to control and customise the processor to implement a particular application. The final level of performance that can be extracted from a processor for a particular application can thus be viewed as the level of usable or "achievable application available" price-performance.

In the semiconductor companies' drive to improve processor application available price-performance, a new class of processor, the multicore device, has been developed. Multicore devices are highly integrated processors that are built from a variety of elements (cores), each of which may be highly specialised, in order to provide the maximum level of useful price performance for a particular aspect of an application that can be executed by the processor. Such devices may be "heterogeneous", i.e. incorporating multiple, dissimilar cores, or "homogenous", i.e. incorporating multiple similar cores.

Most multicore devices may also be classified as System on Chip (SoC) devices, since the integration includes not only the multiple processing cores, but also the memory, IO and other system "cores" that are required to handle most (if not all) of the hardware requirements for any particular product. Although not all SoC devices have multiple processing cores, the terms multiple core and SoC are often interchanged. A good example of a multicore SoC can be found in many mobile phones, where one will find a single processor containing one or more DSPs to run the wireless interface, and a general purpose processor to run the user applications on the phone.

The emergence of multicore devices has been enabled by Moore's Law, which states that the number of transistors that can be fitted into any given area of silicon will double every 18 months due to improvements in the manufacturing process. Moore's Law therefore allows for more individual transistors to be fitted into any given area on the silicon die, making it technically and economically viable to manufacture ever more complex devices on a single piece of silicon. Equally, by reducing the size of the transistors, they are capable of being switched at ever higher speeds.

Historically, Moore's Law was used to manufacture a new generation of processors at smaller sizes which were faster or more cost effective in terms of silicon used, without any major changes to the underlying architecture (i.e. the improvements were improvements in manufacturing process and the device's physical micro-architecture rather than of device's logical macro-architecture).

Effectively, the trend towards multicore/SoC processors can be seen as a macro-architectural shift to higher levels of integration which first started with the introduction of IO (communications) functionality onto the silicon die itself; now the IO, the memory, and the functionality of multiple processing units, DSPs and co-processors can be integrated onto the same silicon die. These processors should reduce the manufacturing costs of end products by providing the lowest cost, highest performing processor for a particular class of application. Also, by integrating most of the system components onto a single processor, the part count can be reduced, therefore increasing reliability and lowering power consumption.

A key problem is how the use of the underlying hardware in such multicore devices can be optimised, in order to achieve the highest possible "application available" price-performance.

There are many ways in which processor and system designers may leverage parallelism within the application software (application level parallelism), and within the instruction stream (instruction level parallelism). The various manifestations differ in where the parallelism is managed and whether it is managed when the system is executing/at "run-time" (dynamic systems), or when the application software is being compiled/at compile time (static systems). In practice, the partition between dynamic and static systems and hardware intensive and software intensive solutions is not distinct and techniques from one discipline are often borrowed by the other.

At the level of the individual processing core, the concept of multiple issue processors, or machines which operate on many instructions from a single stream in parallel, is well established in the art. They come in two basic types; superscalar and Very Long Instruction Word (VLIW) processors. Superscalar processors issue varying numbers of instructions per clock cycle identified either at run-time (dynamically scheduled) or at compile time (statically scheduled). VLIW processors issue a fixed number of instructions, forming a very long instruction word, as defined by the compiler. Typically, the programmer is completely unaware of this process as the programming model of the system is a standard, single processor abstraction.

Super-threading and Hyper-threading are both technologies which emulate multiple processors by multiplexing multiple threads of execution amongst multiple virtual processors. Typically, these virtual processors share certain resources which, statistically, would not be used by a single thread all of the time. Super and Hyper-threading architectures appear as multiple independent processors and therefore require a level of application parallelism to be present in order to work efficiently. Typically hardware limitations in the processor core limit the number of threads which may be supported to substantially less than 100.

Furthermore, several system-architectural options exist for the exploitation of the inherent parallelism in many applications. Multiple Instruction Multiple Data (MIMD) machines, where each processor executes its own instructions and operates on its own set of data whilst cooperating with its peers through some shared resource (for example memory and/or interconnect), have become popular due their ability to address a wide variety of applications.

As performance demands increase, embedded systems are increasingly making use of multicore MIMD architectures, using multiple dissimilar or similar processing resources, to deliver the required level of silicon efficiency. Typically, these are a class of MIMD machine called centralised shared memory architectures, i.e. a single address space (or a proportion thereof) is shared amongst the multiple processing resources, although more application specific hybrid architectures are also commonly found.

Although each processing resource of a MIMD array may exploit Instruction Level Parallelism (ILP), MIMD machines may also take advantage of Thread Level Parallelism (TLP) to realise the potential performance of the underlying hardware. In contrast to ILP, which is identified at run-time (by specific hardware) or compile-time (by optimising compile tools), TLP is defined within high-level programming software at application design time.

Threading is a concept that has been used within the software community for many years, as a high level expression of parallelism. A thread defines an autonomous package of work containing an execution state, instruction stream and dataset, which, by definition, may execute concurrently with other threads. The complexity of the instruction stream is unimportant. A thread may describe anything from a simple transfer of data to a complex mathematical transform.

Traditionally, operating systems have assisted in the provision of system management, including thread allocation functions, which enable an application to be run on a certain configuration of a multicore architecture without the software engineer requiring detailed understanding of the underlying device architecture. However, existing software techniques for thread management within a uni-core device cannot be readily adapted to multicore architectures in a consistent way. Solutions to date have been proprietary, requiring bespoke solutions on a design by design basis and have typically compromised performance and scalability.

Historically, in the case of heterogeneous multi-core systems (that is, systems having broadly dissimilar processing resources), many varying approaches have been employed to enable the disparate processing resources to work together. However, broadly these may be split into two categories, "proxy host" and "co-operative" (also known as "peer to peer"). In the former case, a designated general purpose host processor (which in a bus-based system is often referred to as a CPU) governs the system overall, brokering tasks across the system and synchronising access to resources such as memory and devices. Such system supervision is typically operated in an operating system kernel and competes for slices of time with the system application and the processing of asynchronous events on the host processor. In other words, this general purpose processor must act as a centralised proxy thread manager for all the processing resources on the multicore device, as well as act as a key application processor.

When used in this configuration, the general processor must maintain queues of threads ready for execution for each processing resource, depending on a predefined scheduling policy, i.e. their priority (i.e. dispatch or ready queues), as well as queues of threads awaiting some event, or the return of another thread's results, before they can themselves start to be executed (i.e. pending and timing queues). These are in addition to other system overheads, such as processor configuration prior to thread execution.

Whenever the general purpose processor diverts its processing time from a thread it is currently executing, to the administration of the system (including thread management), for example, as a result of an interrupt issued due to the completion of a thread (and therefore the freeing up of the processing resource that has just completed that thread), the general processor must make a context change.

A context change involves storing the current progress of the thread being halted into memory, fetching instructions relevant to the administration routines for the servicing of the other threads/processing resources, then carrying out those instructions, including any configuration requirements. A further context change must be carried out to return to the original, halted thread. These context changes are typically executed on receipt of an interrupt, and in embedded systems, these interrupts are often both frequent and asynchronous to the application code executing on the general purpose processor. Therefore, the system as a whole exhibits significant degradation of performance. Context switches also have a negative impact upon the effectiveness of host processor caches (the so-called "cold-cache" effect)

In the case of a co-operative system, each processing resource runs a separate instance of an operating system, part of which enables inter-resource communications. Such an arrangement accordingly has a relatively rigid architectural partitioning, as a result of a specific routing of interrupts between peers. Although this type of system offers the primitives required to produce an application, the performance of the implementation still suffers from frequent context switches associated with operating system kernel activity.

In summary, current designs and methodologies for the realisation of system management in traditional architectures (general purpose processors, software executives etc.) are inappropriate for the system and thread management of complex heterogeneous multi-core architectures. Indeed the general purpose processor is poorly optimised at both the micro (instruction set) and a macro (caches, register file management) architectural level. Although the interconnect of a multicore processor provides a physical medium for interoperation between the separate processing resources, there is no system wide task management and communication layer shared amongst all the processing resources enabling a coherent approach to system management. In the worst case this may lead to a distinct problem associated with every possible communication channel between every processing resource, each of which must be traditionally separately solved in software on an ad-hoc basis.

Thus, there is a need for an efficient method of system management of these very complex multicore architectures. Software abstraction alone cannot provide the requisite level of performance of complex multicore architectures.

"System applications of a new 32-bit floating-point DSP processor" (Arison et al), 22ACSSC-12/88, Volume 2, page 890-897, concerns a DSP processor that employs task-based processing. A multiprocessor system is suggested, each processor having a single core. One of these processors is designated as a "master" and is used to configure task scheduling. In another configuration, a general purpose micro controller that is separate from the other processors carries out task scheduling instead.

US-5,504,670 relates to a computer system having multiple processors and multiple resources for use by the processors when executing their assigned tasks. A plurality of sub-controllers allow the resources within the computer system to be allocated among the processors, such that each of the processors has the resources required to complete its task.

## Summary of the Invention

According to a first aspect of the present invention, there is provided a resource management and task allocation controller for a multicore processor as defined in claim 1.

In a preferred embodiment, the controller of claim 1 is dedicated to resource management and task allocation and does not provide further processing resources.

In embodiments of the invention, the "traditional" Master Processing Unit (i.e. the general processing resource that in the absence of the resource management and task allocation controller of the present invention would carry out the task allocation as well as serving as one of the available processing resources) may start off at system turn on as the master, with the resource management and task allocation controller assuming master status from the MPU during the initialisation sequence.

Embodiments of the invention also provide functionality for heterogeneous multicore processors that enables the allocation of tasks to processing resources that would otherwise be ignored for use in processing a particular task. In such a way, the controller of the present invention allows more efficient use of the available resources.

By providing a separate resource management and task allocation controller, the invention provides an improved task allocation and management system for a multicore processor, enabling the more efficient allocation of tasks between the available processing resources. The controller abstracts the elements of system management and exception handling into a dedicated, efficient, hard-coded embodiment.

Embodiments of the invention employ controller clients along with the controller, rather than enforcing the role of a "proxy agent". The controller clients may be implemented in hardware or software. Such an arrangement efficiently masters the "run-time" activities of the underlying system. In particular, the controller continually ("greedily") maintains the correctness of the system thread states and scheduling decisions based upon the range of pre-defined allocation parameters.

The architecture of preferred embodiments accordingly provides significant benefits in terms of the division of work between the constituent components and the autonomy of individual processing resources, regardless of complexity. All processing resources become slave devices, which are by default "lazy", i.e. they wait to be explicitly instructed by the resource management and task allocation controller to perform tasks, via, in preferred embodiments, dedicated interrupts. Equally, in other embodiments, poll based communications may be used between the resource management and task allocation controller and processing resources.

In systems employing the controller of the present invention, all asynchronous events instigated from outside the architecture, either directly through a pin or indirectly through external manipulation of one of the processing resources (i.e. an IO device), are in preference routed to the controller, where they are compared using a set of scheduling policies, configured at "boot-time", with the currently executing task on the target processing resource. The processing resource is only interrupted if an *interrupt service thread* (IST) associated with the external event presides over the currently executing transaction (thread or task), thereby obviating unnecessary context switching in any processing resource as was a problem in the art. Furthermore, the controller clients of preferred embodiments enable processing resources of arbitrary complexity to perform basic system management operations on shared resources and the controller itself (create thread, issue synchronisation primitive, delete thread, memory copy etc), avoiding the need for an instruction set based machine to execute these tasks by proxy.

In a further aspect of the invention, there is provided a multicore processor comprising such a controller, as defined in claim 22. The invention also extends to a method of controlling and allocating resources in a multicore processor as defined in claim 40.

Further advantageous and features are defined in the dependent claims appended hereto.

Brief description of the drawings

The present invention may be put into practise in a number of ways, and some embodiments will now be described by way of example only and with reference to the accompanying drawings, in which:

Figure 1 shows a schematic block diagram of the logical layout of system incorporating a resource management and task allocation controller in accordance with an embodiment of the present invention;

Figure 2 shows a schematic block diagram of one exemplary implementation of the logical layout of Figure 1, wherein the controller embodying the present invention is incorporated within a general purpose, multicore processor architecture, along with a dedicated memory device and a controller client;

Figure 3 shows, again in block diagram form, an example of a contemporary System on Chip (SoC) bus-based architecture incorporating the elements of Figure 2;

Figure 4 shows a more detailed view of external connections to the controller of Figures 1, 2 and 3;

Figure 5 shows a more detailed view of the memory device of Figures 2 and 3;

Figure 6 shows a more detailed view of the internal composition of the controller of Figures 2, 3 and 4;

Figure 7 shows a schematic block diagram of a controller client as shown in Figures 2 and 3;

Figure 7B shows a schematic block diagram of the system in the case of a single controller client acting as a proxy for multiple processing resources.

Figure 8 shows a more detailed schematic block diagram of a hardware controller client;

Figures 9a and 9b show a generic descriptor and its associated fields;

Figures 9c and 9d show a thread descriptor and its associated fields;

Figures 9e and 9f show a scheduler tier descriptor and its associated fields;

Figures 9g and 9h show a dispatch queue descriptor and its associated fields

Figures 9i and 9j show a pending queue descriptor and its associated fields;

Figures 9k and 9l show a skip list descriptor and its associated fields;

Figure 10 shows a typical relationship between a thread descriptor, the system management controller, a processing resource and the shared system memory;

Figure 11 illustrates the principle of indirection in the arrangement of Figure 10, where two dissimilar processing resources are present;

Figure 12 shows a typical overall view of thread management within the controller of Figure 4;

Figure 13 shows a typical pending queue structure;

Figure 14 shows a typical pending queue skip list;

Figure 15 shows a typical timer queue;

Figure 16 shows a typical Ready queue structure for two processing resources;

Figure 17 shows an exemplary embodiment of a typical single dispatch queue structure;

Figure 18 shows a two tier scheduling hierarchy, including thread bundling; and

Figure 19 shows an exemplary simplified queue structure that might commonly be found in a communications system;

## Detailed Description of the Preferred Embodiment.

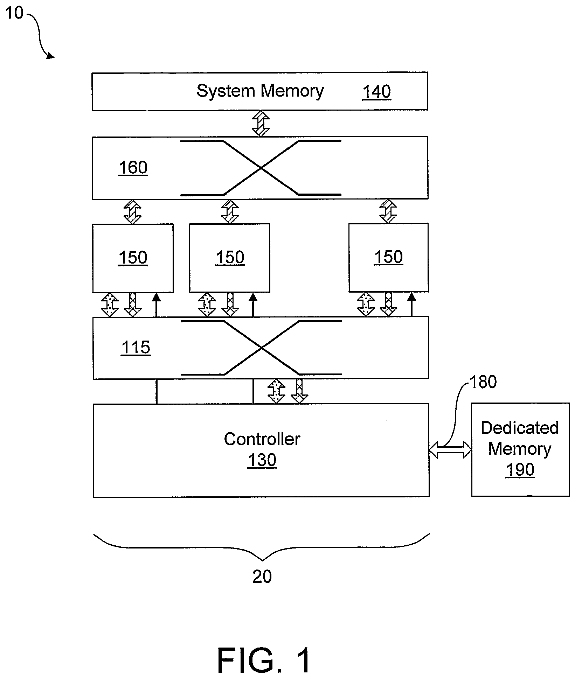

Figure 1 shows a logical view of a system framework 10 incorporating features that are in accordance with an embodiment of the present invention. The framework 10 comprises a plurality of processing resources 150, each of which may be similar or dissimilar to others of the processing resources 150, and each of which may be of arbitrary complexity. Each processing resource shares access to a common system memory 140 where shared data is stored via an interconnect 160. It will be understood that not all system memory 140 is necessarily common to all processing resources 150, of course.

The system framework also comprises a centralised task allocation and management system 2O in accordance with an embodiment of the present invention. The centralised task allocation and management system 20 includes a system management controller 130 and a dedicated tightly coupled memory interface 180, connected to a dedicated tightly coupled memory 190. Each processing resource 150 is able to access the controller 130 via an interconnect 115. It is to be understood that no particular interconnection strategy (that is, the arrangement by which the controller 130 communicates with each processing resource 150 and vice versa, and the arrangement by which each processing resource 150 communicates with the system memory 140) is required in the implementation of the arrangement of Figure 1; in particular, point to point links, a central system bus or even a pipelined architecture may equally be employed, save only that each of the processing resources should be able to communicate directly or indirectly (i.e. via other processing resources or otherwise) with the controller 130.

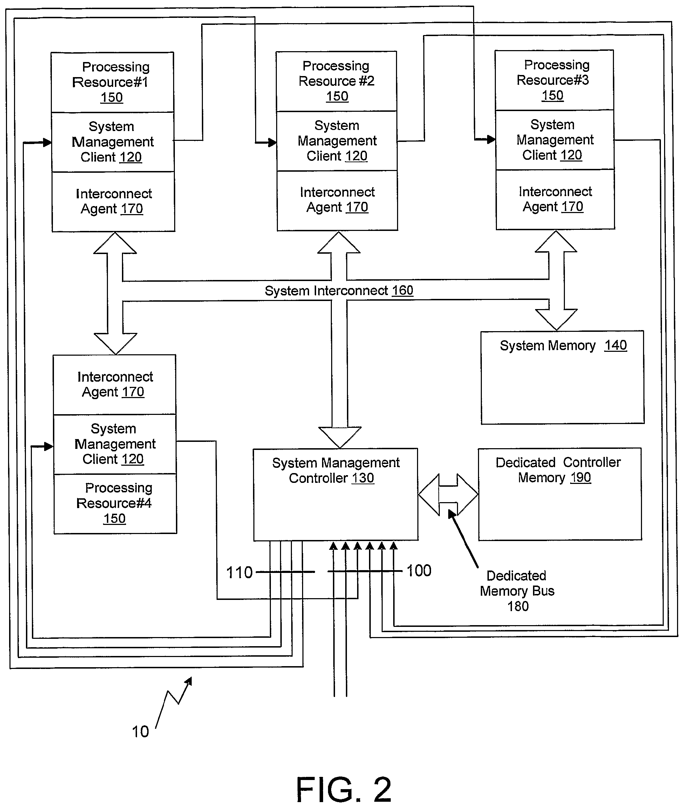

Figure 2 shows a multicore processor implementing the logical arrangement of Figure 1, again by way only of an example. The multicore processor of Figure 2 employs a plurality of the processing resources 150, each connected via a system interconnect 160. The system interconnect 160 communicates in turn with the system management controller 130 via input interfaces 100, and output interfaces 110. In the example of Figure 2 the system interconnect 160 is laid out as a traditional central bus which connects each of the processing resources 150 with one another and with the controller 130, and also with the shared system resources such as a system memory 140. Interfacing with the memory 140 may be achieved via any one of a number of currently available interface technologies. The memory may consist of any of the currently available central computer memory technologies, for example Static Random Access Memory (SRAM), or Double Data Rate Random Access Memory (DDR RAM).

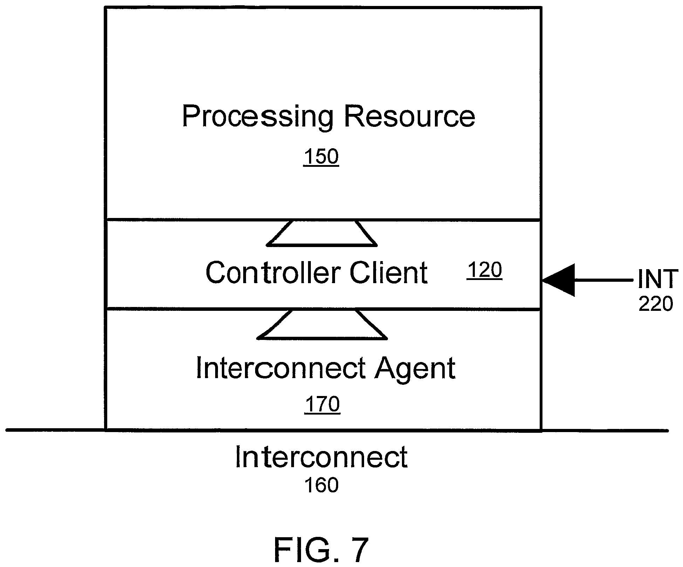

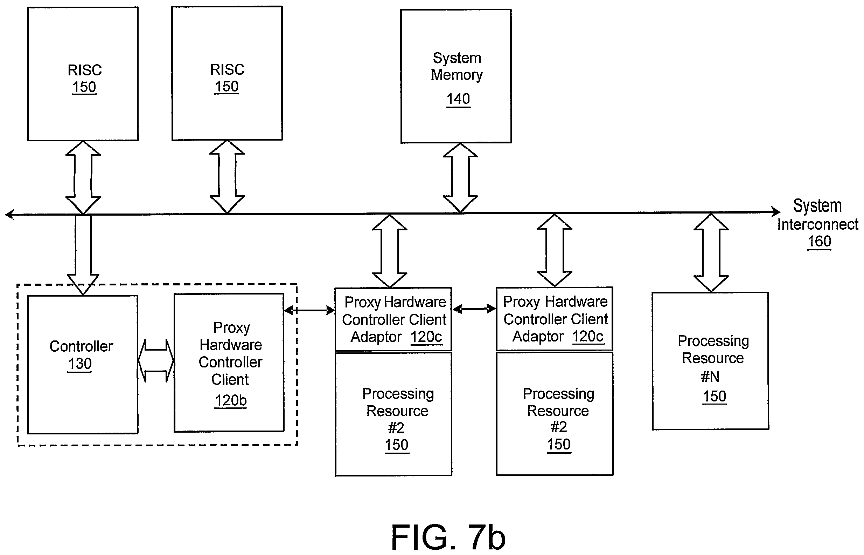

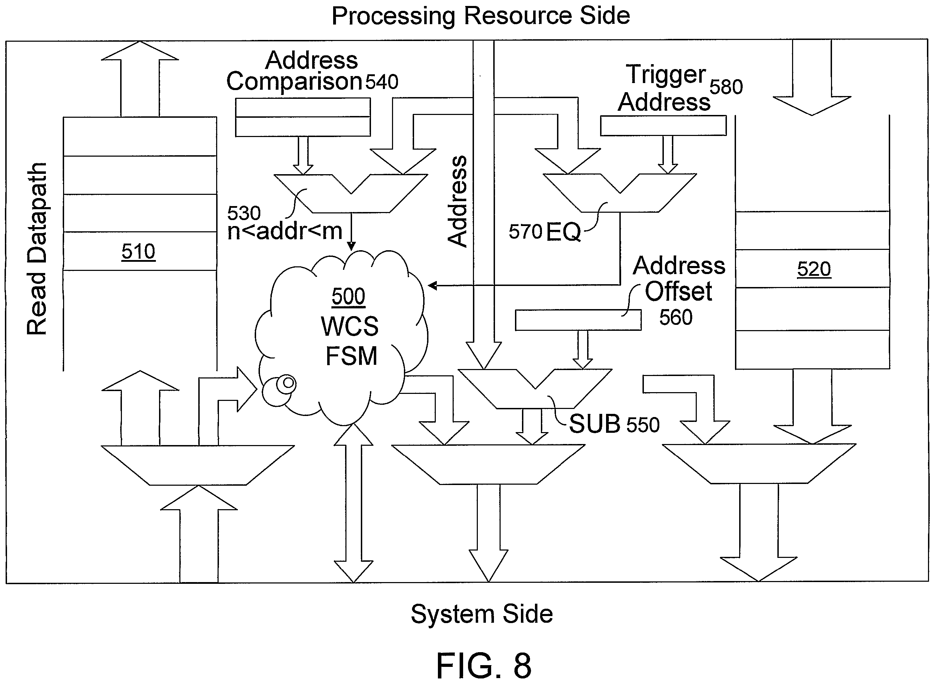

As seen in Figure 2, each of the multiple processing resources 150 has an associated system management controller client 120 configured to receive control information from the central controller 130, and to administer the processing resources 150 in accordance with the control information received. The function and purpose of the controller clients 120 is described in more detail in connection with figures 7 and 8 below. Each processing resource also has an associated interconnect agent 170 for communication with the controller 130 via the system interconnect 160. The interconnect agent 170 provides a generic interface to the controller client 120, which is independent of the underlying interconnect protocol in use on the system interconnect 160, i.e., it provides protocol translation between the communication protocols in use on the system interconnect 160 and the communication protocol in use by the controller client 120. Due to the use of an interconnect agent 170, the controller clients 120 of embodiments of the present invention may be used with any system interconnect protocol currently available.

The multicore processor, as a whole, is configured to execute a target application, which may be broken down into a number of individual tasks, called threads. Each processing resource 150 is allocated a suitable thread by the controller 130, according to a number of parameters, including, but not limited to, the priority of the thread in question, the availability of each processing resource 150 and the suitability of a particular processing resource to the execution of a particular thread. This will again be described in more detail below.

It is however to be understood that the addition of the system management controller 130 and its dedicated memory 190 do not otherwise require a redesign of the layout of the processor 10.

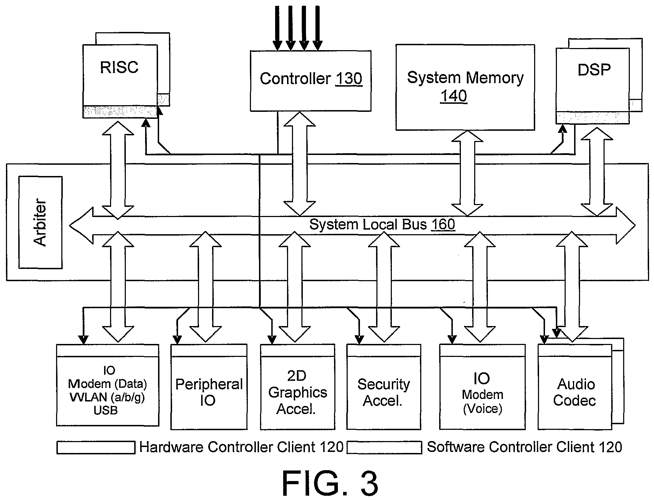

One specific arrangement is shown in Figure 3 which shows a typical System on Chip (SoC) architecture, in block diagram form, and which illustrates the various processing resources that might be placed under the resource management of the controller 130 in a practical application. It will be noted that the processing resources may in particular be of relatively general capability, such as a DSP, or may of relatively limited functionality, such as a peripheral IO.

System Management Controller Interface groups

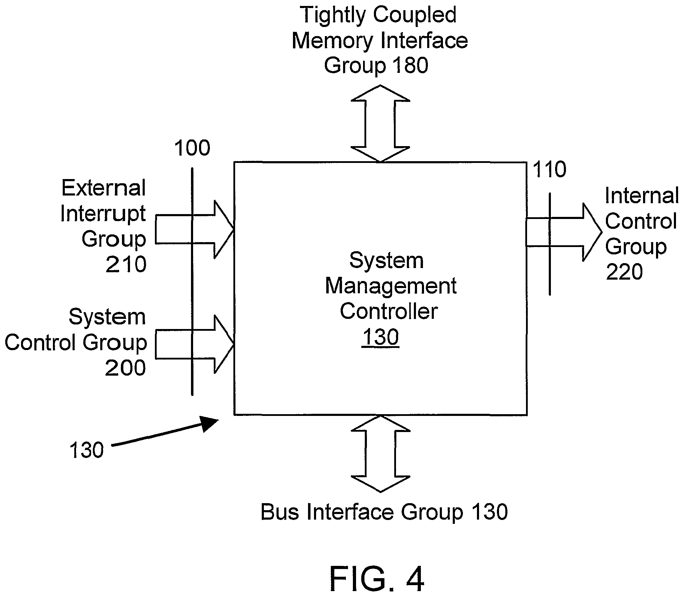

Figure 4 shows the controller 130 and its associated interface groups 200 - 250, located on the periphery of the controller 130.

The system control group 200 comprises the two system input signals required to ensure the correct operation of the system management controller 130. The two system inputs comprise a CLK input, which is connected to the system clock, and a RST input. All output signals from the system management controller 130 are synchronous to the system clock and all input signals to the system management controller 130 are sampled using this clock. The RST input is a synchronous reset signal, for resetting the system management controller 130.

The external interrupt group 210 consists of a group of synchronous external interrupts sourced from outside the system management system. These signals must be synchronised to CLK prior to their attachment to the system management controller 130 periphery. Signals in the external interrupt group 210 may be driven from, for example, input interfaces with the outside world or directly from outside the multicore processor via pins. The number of external interrupt inputs is defined during the multicore processor 10 design phase.

The internal control group 220 consists of a single synchronous interrupt for each controller client 120 and its associated processing resource 150. Therefore the number of groups of signals will typically correspond with the number of processing resources 150 within the system and will be defined during the multicore processor 10 design phase. The internal interrupt signal is indicative of a thread ready for execution, and that is being assigned to the particular processing resource 150 associated with that controller client 120.

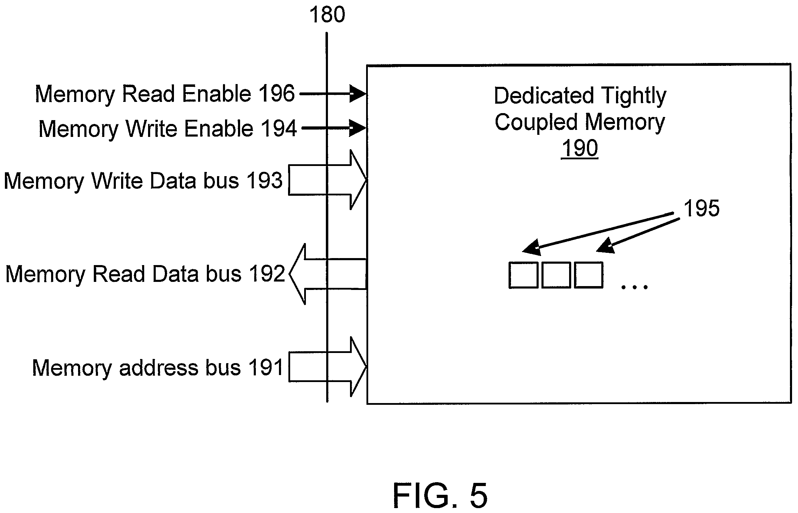

The tightly coupled memory interface group 180 interfaces the system management controller 130 to its own dedicated tightly coupled memory resource 190. Figure 5 shows a typical structure of the dedicated tightly coupled memory 190. The width of the address path and the datapath are defined during the multicore processor 10 design phase. The dedicated tightly coupled memory interface includes a memory address bus 191, a memory read data bus 192, a memory write data bus 193 and write 194 and read 196 enable signals.

The attached memory is assumed to be a synchronous SRAM device. The dedicated tightly coupled memory 190 contains an integer number of controller memory elements 195, as defined during the multicore processor 10 design phase, according to the needs of the target application. In the currently preferred embodiment, each controller memory element 195 consumes 256 bits of memory space. Again in the currently preferred embodiment, the controller supports a maximum of 65536 controller memory elements (i.e. a 16Mb memory). Although queue descriptors, as described later, do consume controller memory elements 195, in a typical system the number of controller memory elements 195 required would be dominated by thread support requirements. For example, a system capable of supporting 400 threads simultaneously within the system management controller 130 would require approximately 128kb of attached memory.

The interconnect interface group 230 of Figure 4 conforms to the chosen interconnect protocol used in the multicore processor 10, and the interconnect agent 170, which is defined during the multicore processor design phase.

Controller Subblock description and functions

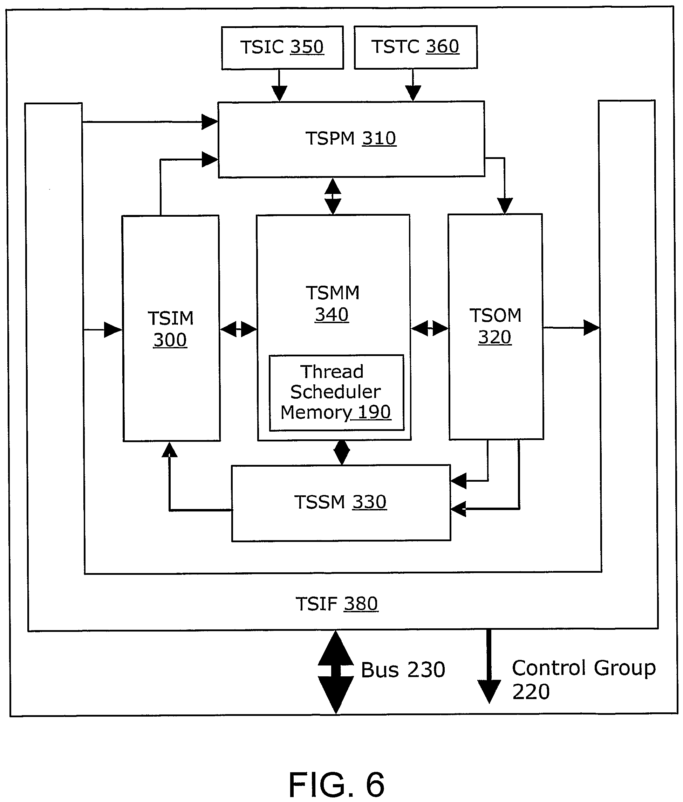

Figure 6 shows the main logical components of the system management controller 130. The functionality of the controller 130 is split amongst four primary internal parallel processing subblocks, performing the following functions:

1. A Thread Input Manager (TSIM) 300, configured to maintain a list of free controller memory elements 195 within the dedicated tightly coupled memory 190, and to oversee controller memory element 195 recovery.

2. A Thread Synchronisation Manager (TSPM) 310, configured to maintain Pending lists and a timer queue within the dedicated tightly coupled memory 190 and to perform synchronisation between threads, and to perform promotion of threads to Ready queue structures within the dedicated tightly coupled memory 190, as required. The Thread Synchronisation manager 310 maintains the integrity of the pending and timer queue structures via insertion and extraction of pending thread descriptors within the dedicated tightly coupled memory 190.

3. A Thread Output Manager (TSOM) 320, configured to maintain Ready queue structures within the dedicated tightly coupled memory 190, and Dispatch queues for each processing resource 150 within the dedicated tightly coupled memory 190. The Thread Output Manager (TSOM) 320 is further configured to generate the interrupts 220 sent to the controller clients 120. Maintenance of the integrity of the ready queue structures is performed by insertion and extraction of thread descriptors held in controller memory elements 195, within the dedicated tightly coupled memory 190.

4. A Thread Schedule Manager (TSSM) 330, configured to provide scheduling decisions for each processing resource 150 within the ready queue structures located within the dedicated tightly coupled memory 190.

Additionally a number of secondary processing subblocks provide support functions:

5. A Thread Memory Manager (TSMM) 340, configured to provide aggregate access to the attached dedicated tightly coupled memory 190, including mutual exclusivity and locking.

6. An Interrupt Manager (TSIC) 350, configured to convert incoming external system interrupts into internal synchronisation primitives.

7. A Time Manager (TSTC) 360, configured to provide timer functions for synchronisation purposes and watchdog timer functionality to each processing resource 150.

8. A System Interface (TSIF) 380, configured to provide interconnect interfacing and configuration and run-time access to the multicore processing resources 150.

There now follows a detailed description of the interaction of the above primary and secondary processing subblocks within the system management controller 130.

Each sub-block presents a set of functions to other sub-blocks, enabling each to instruct its peers to execute manipulations on their respective maintained structures within the dedicated tightly coupled memory 190. Functions are called by a particular subblock, on receipt of a similar command received at a controller software Application Programming Interface (API).

Thread Input manager functions:

The thread input manager 300 provides three public functions to other sub-blocks within the system management controller 130.

The FreeListStatus function returns the head pointer and number of elements within the controller memory element 195 free list. The free list is a list of the controller memory elements 195 that are currently unused. This function can only be called by the system interface 380, on receipt of a similar command at the controller 130 software API

The PushFreeIndex function is used to push a liberated controller memory element 195 index back onto the free list. This function can only be called by the Thread Schedule Manager 330.

The PopFreeIndex function is used to pop a free controller memory element 195 index from the free list. It is typically called from within the API call service routine within the system interface 380.

Thread Synchronisation Manager functions:

The Thread Synchronisation Manager 310 provides seven public functions to the other sub-blocks within the system management controller 130.

The following five functions can only be called by the system interface 380, in response to similar commands received by the controller 130 software API.

The PushPendingDescriptor function is used during the boot process to add a pending queue descriptor to the list of pending queue descriptors.

The PushThread function is used during runtime to add a dependant thread to a given pending queue.

The SetTimerStatus sets the head pointer and number of elements within the timer queue.

The GetTimerStatus function returns the head pointer and number of elements within the timer queue.

The SetPendingStatus function sets the status of the pending queue descriptor list.

The GetPendingStatus function returns the head pointer and number of elements within the pending descriptor queue.

The SyncEvent function is used to issue a synchronisation primitive to a given pending queue. This function is called by the thread interrupt manager 350 and the system management controller 380.

The TimeEvent function is used to issue a timer based synchronisation primitive to the timer queue. This function is only called by the time manager 360.

Thread Output Manager functions:

The Thread Output Manager 320 provides five public functions to the other sub-blocks within the system management controller 130.

The Push function places a thread descriptor within the ready queue structure. The method may be called with high priority to expedite processing speed (for example, to handle interrupts). Where threads are independent (immediately ready) the call will be made from the system interface 380, where the thread descriptor originally had dependencies the call is made from the thread synchronisation manager 310.

The following three functions can only be called by the system interface 380, in response to the receipt of a similar command at the controller 130 software API

The GetDispatchQueueStatus function returns the head pointer and number of elements within the dispatch queue list.

The SetDispatchQueueStatus function sets the head pointer and number of elements within the dispatch queue list.

The DispatchQueuePop function pops a thread descriptor from a the head of a dispatch queue.

The DispatchWorkQueuePush function pushes a dispatch queue onto the thread output manager 320 work queue. This function can only be called by the thread schedule manager 330, which uses this function to inform the output manager 320 of changes required within the dispatch queue as a result of schedule updates.

Thread Schedule Manager functions:

The Thread Schedule Manager 330 provides three public functions to the Thread Output Manager 320 and System Interface (TSIF) 380, located within the system management controller 130.

The PushPushWorkEvent function is called by the thread output manager 320, immediately after it adds a thread descriptor to a ready queue structure.

The PushPopWorkEvent function is called by the thread output manager 320, immediately after it removes a thread descriptor from a ready queue structure.

A FreeIndex function enables the liberation of a controller memory element 195 to be properly synchronised with scheduling activities ongoing within the Thread Schedule Manager 330. The call may be issued on receipt of a similar command at the controller 130 software API, or as a result of a pop operation within the Thread Output Manager 320

Controller Client

As described earlier, the term processing resource 150 is applied to any resource that may execute an instruction, regardless of how rudimentary the instruction may be. Therefore resources that have a fixed function, such as an input/output module, are also included. Depending on the type of processing resource 150, the connection between the system interconnect 160 and the processing resource 150, via the system management core client 120 may be either uni-directional or bi-directional.

Figure 7 shows an exemplary schematic block diagram of a controller client 120 for use with the system management controller 130.

On appropriate processing resources 150, for example general purpose processors or Digital Signal Processors, the controller client 120 will typically be implemented in software. However, where the processing resource 150 is of limited function, the controller client 120 may require a hardware component.

When a hardware component is used between the system interconnect 160 and the processing resource 150, the controller client 120 still interfaces to the processing resource 150 using the same interface. That is to say, the controller client presents an identical interface to the interconnect agent 170 as that of the processing resource 150 to the controller client. In some cases, it is appropriate to treat the data path into the processing resource as distinct from the data path out of the processing resource, for example in the case of an Input/Output device.

In addition to the main interface, the controller client 120 also provides out of band interfaces for use as outputs for run-time and debug events. Where a software controller client 120 is used, these are provided using standard interrupts, calling appropriate service routines.

Controller Client Mode of Operation:

Each controller client 120 is fully interrupt driven. Upon receipt of an internal interrupt from the controller 130, the controller client 120 pops the thread descriptor from the head of the dispatch queue associated with that particular processing resource 150, which is held in the dedicated tightly coupled memory 190. The unique reference within the thread descriptor is then used to read further thread control information, the Thread Control Block (TCB), from the main memory resource 140. The information contained within the TCB may be any of:

1. Controller client 120 configuration content. This information may be used to configure controller client 120 system resource usage policing, data presentation mode, and the like.

2. Processing Resource 150 Configuration content. This is information required to prepare the processing resource 150 for execution of a particular thread. This may include recovery from a previous partial execution of this thread or configuration of a specialist hardware accelerator, such as an audio CODEC.

3. Instruction content. In the case of a fixed function hardware accelerator, the "instruction" will be implicit in the targeted hardware processing resource 150, for example an output instruction when the processing resource 150 is an output module, and any required specialisation or configuration will be accommodated within the configuration information. In the context of a software controller client 120, this will typically be a pointer to the function code associated with the thread.

4. Data content. This content may define the start address or multiple addresses in the system memory 140 and range of data over which the thread may operate.

5. Controller client 120 post-processing content. This content determines the actions of the controller client 120 after the completion of the thread execution.

There are three distinct phases of operation of the controller client 120:

1. Configuration phase, where the processing resource 150 and the controller client 120 are prepared for execution of a particular thread. In the simplest case the configuration phase will be null.

2. Execution phase, where the thread is being executed and the controller client 120 may be supplying data and/or monitoring resource utilisation.

3. Completion phase. Completion of processing may result in no action, the creation of another thread, the issuance of a synchronisation primitive or a combination of thread creation and synchronisation. Furthermore, the controller client 120 may also be required to set or update scheduler metrics and terminate threads. In the event that, during execution of the thread, further memory is required to store results, the controller client 120 must also execute this method.

In circumstances where an individual hardware controller client 120b makes full use of the available system interconnect 160 bandwidth during active periods, an optimised solution would allow a controller client 120b to operate as a proxy for multiple hardware processing resources 150. Such an arrangement is shown in figure 7B. As in the previous case, the proxy controller client 120b is interrupt driven, however, whereas in the previous example only a single interrupt was routed from the controller 130, in the proxy controller client model, there is an interrupt per processing resource 150. According to the index of the interrupt received from the controller 130, the proxy controller client 120b executes the same steps on the identified processing resource 150. In the proxy controller client model, where system interconnect 160 usage policing is required, a hardware adaptor 120c will remain between the processing resource 150 and the system interconnect 160.

As mentioned previously, the controller client 120 may be implemented in software. In this case some of the functionality of the controller client 120, for example shared resource usage policing, will typically make use of existing hardware components which may already be present in the processing resource 150 hardware (for example, a memory management unit (MMU)).

Consequently, the software controller client 120 architecture and implementation is processing resource 150 specific.

Hardware controller clients 120 may also have specialist requirements according to the idiosyncrasies of the associated processing resource 150. The following section describes a generic architecture which will be suitable in the majority of cases.

General Example of a Hardware Controller Client

The basic structure of the hardware controller client 120 is shown in Figure 8. At the functional heart of the design is the controller client Finite State Machine (FSM) 500. This Finite State Machine (FSM) 500 may be active during all three phases. The controller client FSM 500 is activated by an interrupt 220 from the controller 130.

Firstly the controller client FSM 500 masters the system interconnect 160 to read the TCB from the shared memory resource 140, which contains a reference to its own instructions. During the configuration phase the controller client 120 may master the processing resource interface, interpreting configuration commands and translating them into write cycles issued to the processing resource 150. Furthermore, the controller client 120 configures its own resource policing. The manner in which the transition from the configuration state to the executing state is processing resource 150 specific, but may be marked by an explicit execute primitive or merely an entry into a data transferral state.

From a controller client 120 perspective the simplest architecture has an identical interface protocol on both the processing resource 150 and the system side. In this case, during the execution phase, processing resource 150 read and write cycles are simply mapped across to the system interface with checking where appropriate.

The simplest controller client 120 implementation would require a FIFO style interface in both the system to processing resource 510 and processing resource to system 520 paths. During the execution phase of a controller client 120 of this nature, data can be presented to a processing resource 150 by message or streaming modes. Message mode, where the entire dataset is accumulated locally within the controller client 120 prior to processing, engenders a more coarse grain blocky interconnect behaviour which may facilitate more complex interconnect arbiters. Streaming mode, where data is streamed directly from the system memory into the processing resource 150, presents a more silicon efficient solution requiring more careful consideration of hand-shaking and exhibiting fine grained interconnect transactions and tight coupling to interconnect performance.

The transition from the execution to the completion phase may be inferred, by measuring the presentation of data to the processing resource 150, or explicitly signalled by the processing resource 150 itself. During the completion phase, the controller client 120 once again executes from the set of instructions provided by the original thread control block.

Note that, in some cases, it is appropriate to treat the datapath into the processing resource 150 (for example an input/output device) and the path out of the processing resource 150 as distinct. In contrast it will be natural in some cases (for example, algorithmic accelerators such as DSPs) to couple the consumer and the producer of data within the same controller client 120 framework.

In order to provide a level of decoupling between the processing resource 150 and the other system resources, a number of additional facilities may also be provided by the controller client 120:

a) Addresses generated by the processing resource 150 may be checked against expected behaviour as defined by a base address and offset definition, by using a comparator 530 and a comparison address register 540.

b) Addresses generated by the processing resource 150 may be offset, using a subtractor 550 and offset address register 560, enabling the processing resource 150 to have a normalised view of the address map for any given thread, typically normalised around address 0x0.

Objects

Instances of datatypes used within the system management controller 130 are divided into public (visible from and manipulated by the system at large) and private visibility (visible only within the system management controller 130 and manipulated only by the system management controller 130 sub-blocks). To ensure portability of the design across multiple end applications, all thread, queue and aggregated queue descriptors are stored within the dedicated tightly coupled memory 190 using a common base class, the controller memory element 195.

Controller Memory Elements

Each controller memory elements 195 may represent any of seven descriptor types:

1. Free List Element. This element is free for usage by any of the other descriptor types. No user initialisation or runtime manipulation is required.

2. Thread descriptor (TD). This is a data structure representative of an application/OS thread. This descriptor may exist in either a pending queue, a Ready queue or a dispatch queue within the dedicated tightly coupled memory 190. No user initialisation is required, but runtime manipulation is required.

3. Scheduler Root Descriptor (SRD). This is the top descriptor of a scheduler hierarchy. User initialisation is required, but no runtime manipulation is required. The root descriptor has no parent, but children can be any of: an SSTD, a DSTD or a TD.

4. Static Scheduler Tier Descriptor (SSTD). This is a static scheduler tier descriptor, whose parent may be either an SRD or another SSTD. The SSTD's children can be any of: another SSTD, a DSTD or a TD.

5. Dynamic Scheduler Tier Descriptor (DSTD). This is a dynamic scheduler tier descriptor. User initialisation is not required, but runtime manipulation is required. The parent of a DSTD may be either an SRD or an SSTD, but a DSTD may only have TD children.

6. Dispatch Queue Descriptor. This type of descriptor describes a list of thread descriptors, which are waiting for pop operations from the associated processing resource 150. User initialisation is required, but no runtime manipulation is required.

7. Pending Queue Descriptor. This type of descriptor describes a list of thread descriptors, which are awaiting a synchronisation event. User initialisation is required, but no runtime manipulation is required.

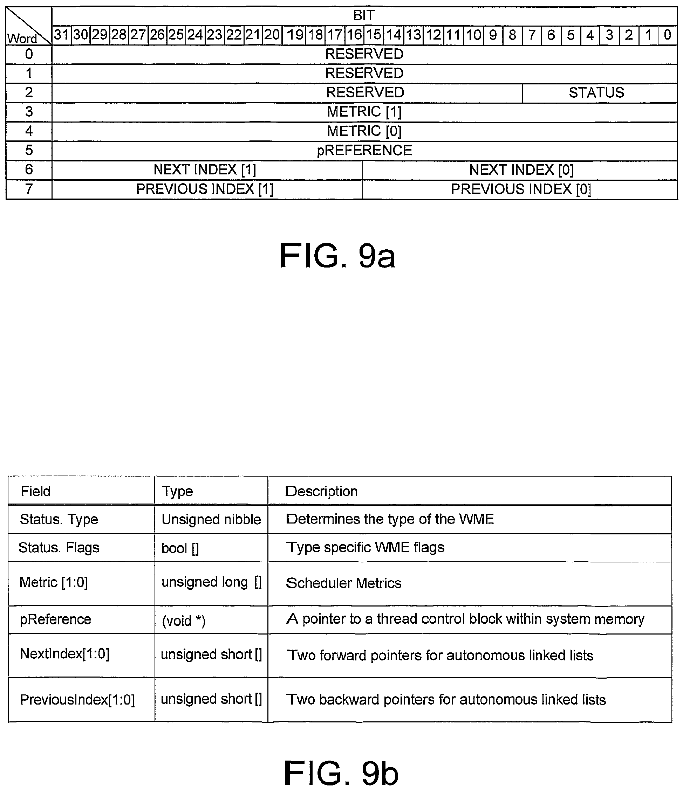

These descriptors are described in greater detail in the following sections.
The various forms of the Controller Memory Elements 195, and their respective are shown in figures 9a to 9l.

Thread representation

Where a descriptor requires initialisation or run-time manipulation, operations are done through the controller 130 API. The centralised task allocation and management system is designed to ensure that real-time interaction is suitable/simplistic enough for a hardware implementation.

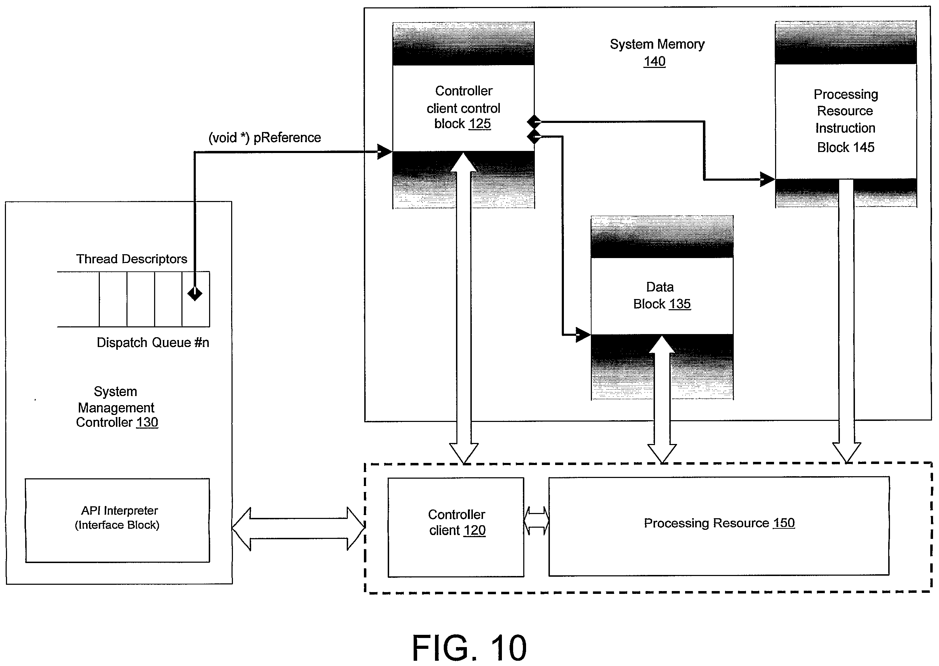

Figure 10 shows a typical relationship between a thread descriptor, the system management controller 130, a processing resource 150 and the shared system memory 140. Each thread primitive contains a unique reference, pReference. This reference is not interpreted or modified by the system management controller 130. pReference provides a pointer to a data structure in system memory 140 defining the task to be executed. Typically this would be a controller client control block 125, and would contain at least the following elements: a Function pointer (shown in Figure 10 as a processing resource instruction block 145), a Stack Pointer and an Argument Pointer (shown together in Figure 10 as a data block 135). Additional fields may be defined which provide in-band configuration or security over shared system resources.
However, according to the application and/or target processing resource 150 the complexity of the controller client control block 125 may vary. In particular, note that further levels of indirection may be included which, given appropriate "control" instruction code and corresponding "datapath" code, may enable disparate processing resources 150 to execute the same functions on the same data under certain circumstances.

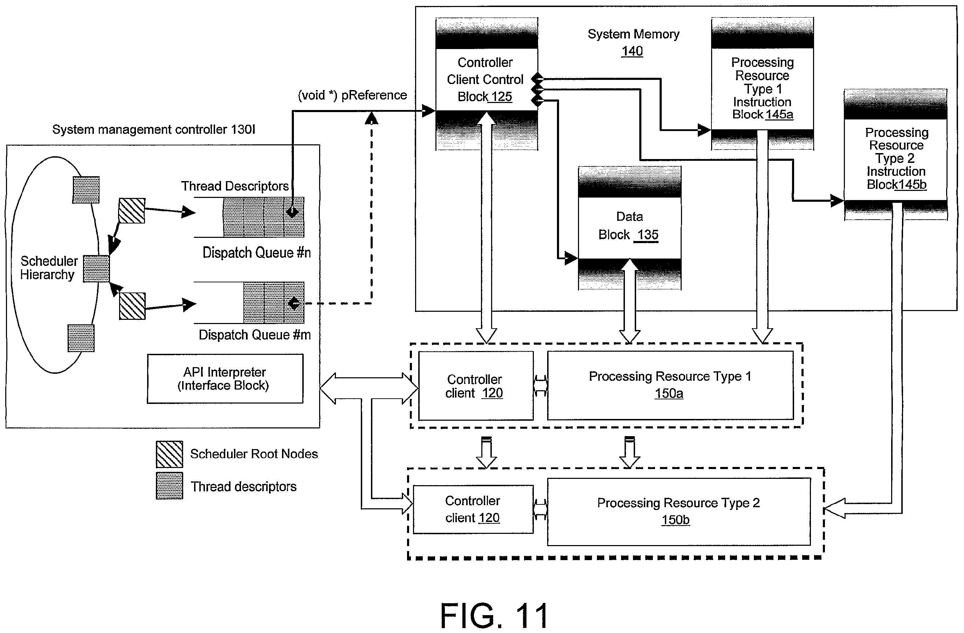

Figure 11 shows an example where a scheduling hierarchy load balances tasks across two dissimilar processing resources (Type I and Type II in Figure 11) 150a and 150b. The pReference field (within the thread descriptors which are queued to this hierarchy) references a controller client control block 125 as before, except here there are pointers for each type of processing resource corresponding to the particular instruction stream required by the dissimilar instruction sets of each. The controller client 120 selects the appropriate instruction stream (instruction block 145a or 145b) according to flags within the Controller client control block 125.
This feature may be useful, for example, in conjunction with the power-down feature of certain processing resources. In the case where the optimal processor for a given task is powered down, it may be desirable for a sub-optimal processor to execute the task rather than incur a costly reboot cycle.
Furthermore, under exceptional loads it may enable a lightly loaded general purpose processor, for example, to relieve the burden on a heavily loaded DSP.
When a processing resource 150 is ready to deal with a thread, it is popped from the appropriate dispatch queue uniquely associated with that processing resource 150. The pop operation returns an object containing pReference, the scheduler metrics that resulted in the scheduling event, and a set of flags including an indication of whether the thread became Ready due to a timeout or a synchronisation primitive. The controller memory element 195 used for the thread descriptor is automatically returned to the free list for use by future thread descriptors.

Public Objects

This section describes the objects visible to the system through the controller 130 API. Typically these objects are manipulated by the centralised task allocation and management system, comprising the controller 130 and the clients 120 and their associated processing resources 150, at runtime.

The runtime controller 130 API enables the application to introduce new threads, introduce new dynamic scheduler elements, issue synchronisation primitives, pop scheduled threads, push pre-empted threads or remove threads.

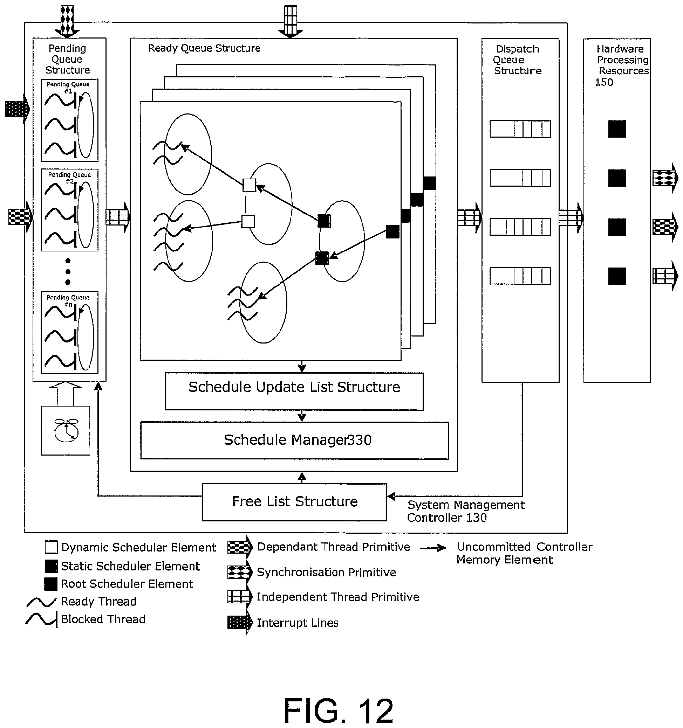

Figure 12 shows a typical overall view of thread management within the system management controller 130.

Thread Primitives

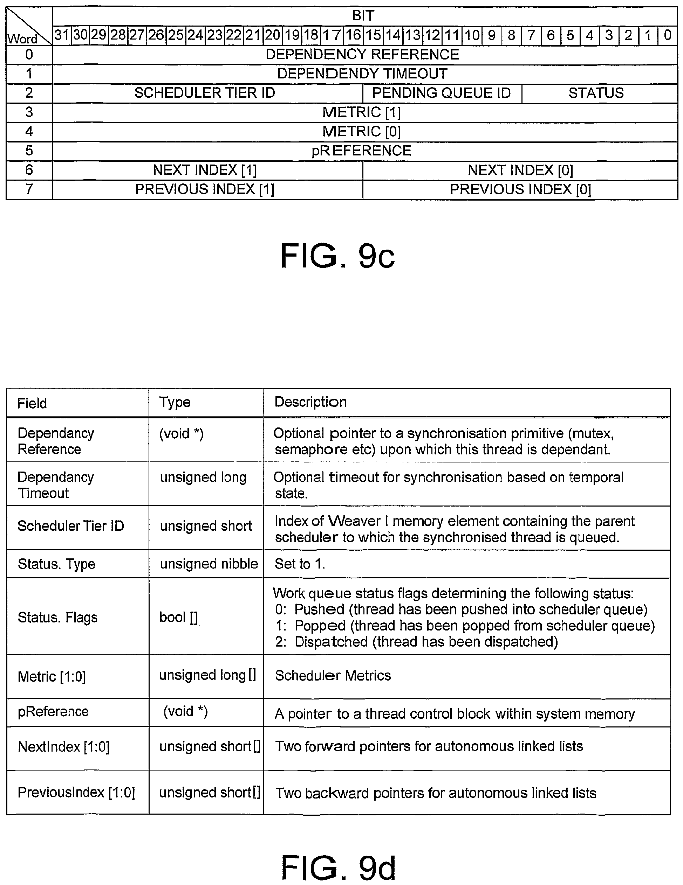

The format of a thread primitive is shown in figures 9c and 9d. According to its dependencies, a thread descriptor may be placed in the pending queue structure or directly into the Ready queue structure. If a thread is to be placed within the pending queue structure the application must define the dependencies of the thread. Dependence upon an external event manifests itself as a dependency reference. The controller 130 does not interpret this dependency reference; it is maintained for comparison to the incoming synchronisation primitives to determine when to transition the thread descriptor into the Ready queue structure.

For dependant threads a timeout may be specified, in conjunction with a null dependency reference this facility may be used as a thread based hardware-timing facility. Regardless of the dependency reference, timeouts cause the thread to be scheduled at a particular time.

Threads are tagged according to the synchronisation event (timer or primitive) that causes them to be promoted to the Ready queue structure.

Synchronisation Primitives

Synchronisation primitives interface with the pending queues and may cause the transition of one or more thread descriptors from the pending queue structure to the Ready queue structure.

Each synchronisation primitive contains a unique reference which is compared with the dependency reference stored within each thread descriptor in the identified pending queue. The comparison continues in the order of priority identified by the thread primitives.

According to its type, a synchronisation may wake either the highest priority matching thread descriptor or all matching thread descriptors within a pending queue. Furthermore, a special broadcast primitive wakes all matching thread descriptors within all pending queues.

Interrupt Processing

An Interrupt Service Thread (IST) methodology provides a valuable means of minimising the load imposed on processing resources 150 by asynchronous events. Furthermore, the accelerated real-time response in systems based on the present invention enables more widespread use of ISTs with minor system modifications.

The controller 130 automatically creates synchronisation primitives from external interrupt inputs 210 on the controller periphery. Preconfigured interrupt service thread descriptors within the pending queues will be promoted to a Ready queue structure upon reception of these interrupt synchronisation primitives.

The application will normally configure the thread descriptor associated with the external interrupt 210 at system initialisation and again within each execution of the associated interrupt service thread.

This facility effectively removes the need for any other dedicated interrupt servicing processing resource 150 within the system. Furthermore it processes these external interrupts 210 through the same priority structure and according to the same policies used for all processor tasks, precluding the need for context switches within processing resources already executing higher priority tasks. An arbitrary number of nested interrupts are supported by the ability to push the currently executing thread back onto the ready queue using the normal pre-emption routines.

Timer based interrupts (watchdogs and periodic events) are handled in a similar manner. Time based tasks (periodic or one-shot) must be inserted onto the timer queue and are handled in a similar manner to threads with a timeout dependency. By design, this methodology precludes time based exceptions with no useful processing requirement.

Interrupt priority may be set such that interrupt routines are allowed to pre-empt currently executing tasks for fast response times.

Private Objects

Private objects are typically configured at boot-time, i.e. during system initialisation after a power down cycle. Processing resources 150 rarely interact directly with internal objects during runtime.

The internal objects are primarily queuing structures. The system management controller 130 administers four primary types of queue: Pending Queues, a Timer Queue, Ready Queues and Dispatch Queues.

Additional secondary queues exist within the system management controller 130 to facilitate internal operations. Movement of thread descriptors between queues takes place with pointer manipulations only. Thread descriptors are never copied.

Pending Queue Structure

Threads may be promoted from a pending queue structure to the ready queue structure through either a synchronisation event or a timer event. A thread may be sensitive to both, or just one of these classes of events. In the case where a thread is sensitive to both, the thread is present in both the pending and the timer queues.

Pending queues hold dependent threads awaiting a synchronisation event. Threads are removed from these structures through either a synchronisation primitive, from a processing resource 150, or by a timer event internally generated by the time manager 360. A configurable number of pending queues are available to the application programmer to support multiple contention scopes and interrupt service threads; elements within each pending queue must be processed according to their priority. There are two alternatives to processing according to priority, sort on insertion and sort on extraction. Sort on insertion defines a process by which the pending list is stored in strict priority order and new threads are inserted into a position within the list according to their priority. Sort on extraction makes an arbitrary choice of where to insert a new thread and performs priority based sorting of eligible thread descriptors after synchronisation. The preferred embodiment of the present invention employs the sort on insertion technique.

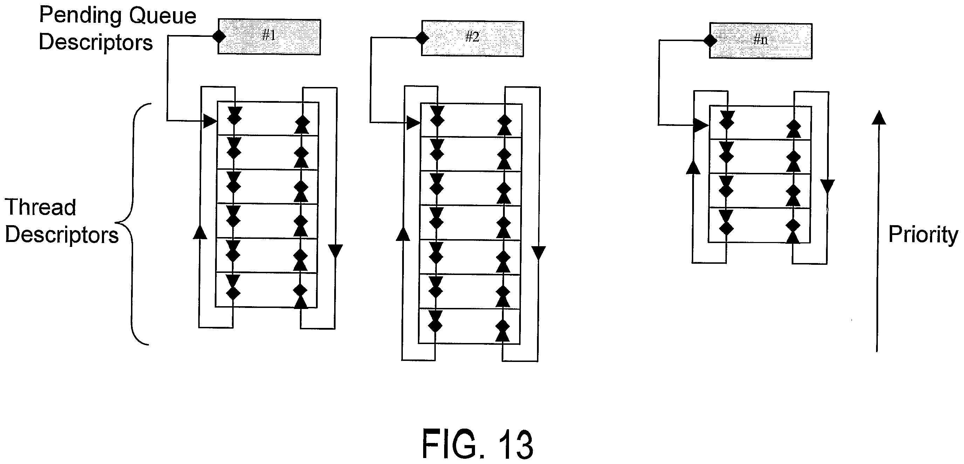

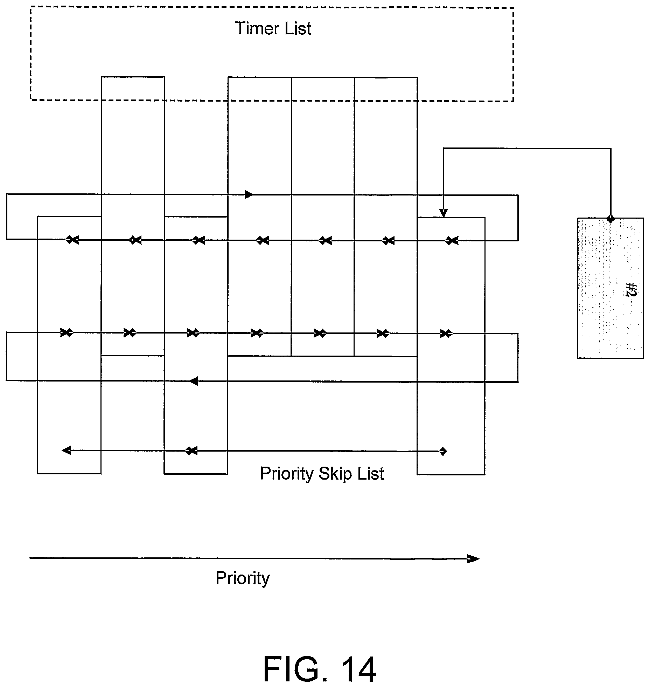

Figure 13 shows a typical structure of the pending queues. Entries are stored in strict priority order. The speed with which the insertion of a new thread may be achieved is accelerated by the use of skip lists, and Figure 14 shows a typical pending queue skip list.

As previously stated, threads may be blocked awaiting synchronisation or timer events. Some threads will be exclusively awaiting a synchronisation event and similarly, some threads will be exclusively awaiting a timer event. In each case, the thread will only be present in a single queue. Each thread contains two sets of pointers, nominally associated with both the pending and timer queues. In these cases the provisioned timer queue and pending queue pointers respectively are spare. Skip lists may take advantage of these spare pointers - for example, if the thread does not appear in the timer queue, these pointers may be reused to indicate a possible jump ahead in the pending queue. This enables an otherwise sequential search to jump blocks of thread descriptors whilst iteratively approaching a correct insertion point for a new dependant thread.

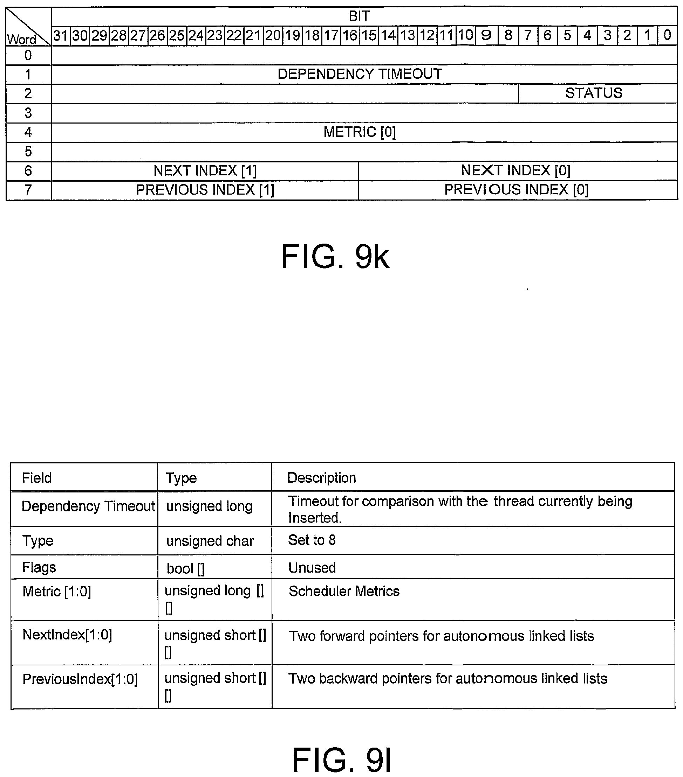

An alternative is a skip node descriptor and one example of this is shown in Figure 9k, along with its associated fields (Figure 9l). The skip node descriptor may periodically be inserted into the pending and timer queue structures according to a predefined metric. Skip node descriptors are inserted according to a defined maximum observed number of thread descriptors between skip node descriptors or participating thread descriptors. Skip node descriptors may simultaneously form a part of a pending queue and a timer queue skip list.

Each new dependant thread must be inserted according to its priority. The process will typically commence by traversing the skip list until the new thread's priority is higher than that of the skip list node. Thereafter, the search will continue, from that skip list node, on a thread descriptor by thread descriptor basis until the correct insertion point is found. This enables the otherwise linear search to skip blocks of pending threads when homing in on the correct insertion point for a new dependant thread.

Synchronisation events have three distinct types:

Unicast: The synchronisation event triggers a state transition on the first (highest priority) appropriate dependant thread found in the specified pending queue.

Multicast: The synchronisation event triggers state transitions on all appropriate dependant threads in the specified pending queue.

Broadcast: The synchronisation event triggers state transitions on all appropriate dependant threads in all pending queues.

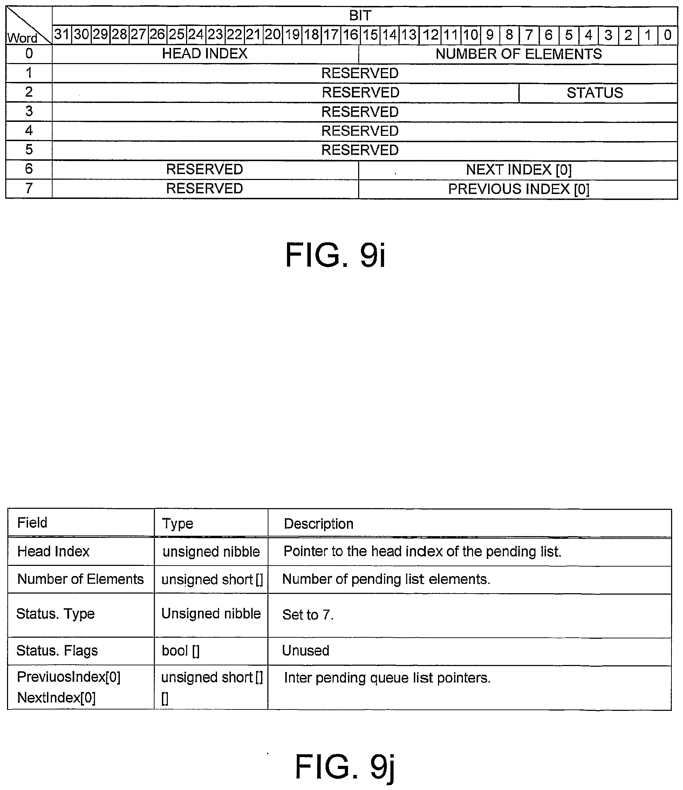

Pending queues are defined by pending queue descriptors, as shown in Figures 9i and 9j. Pending queue descriptors are configured once during system initialisation and consume a single controller memory element 195. Pending queues only contain dependant thread descriptors and skip list nodes.

Timer Queue Structure

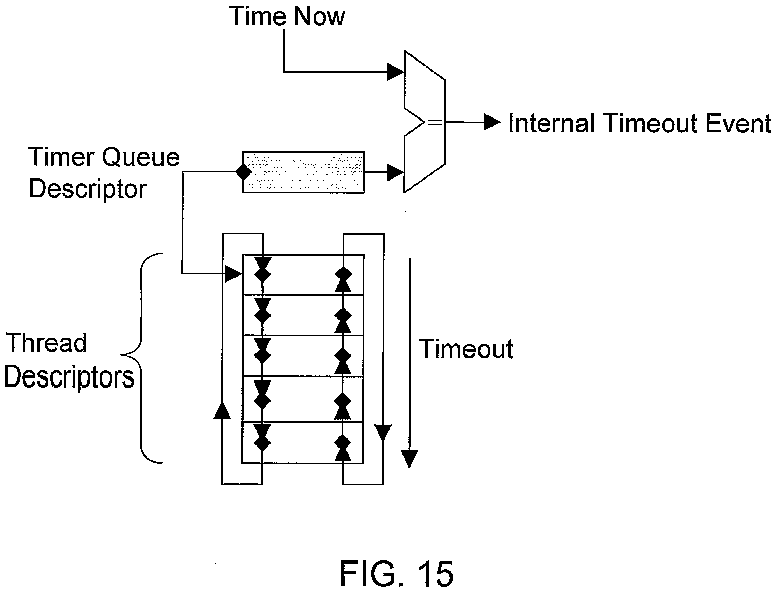

A single system wide timer queue is provided, which stores thread descriptors awaiting a timeout event. Figure 15 shows an exemplary embodiment of a timer queue.

Skip lists are also used to expedite the insertion of threads into the timer queue structure as described above. However, in this case it is threads that only have temporal dependency (if any) which are used for skip lists.

The timer queue descriptor is stored within registers, enabling a concurrent compare to proceed between the head of the timer queue and the current time. This greatly reduces the impact of timer ticks on memory bandwidth.

Ready Queue Structures

Ready queue structures hold threads that are ready for execution. These threads were created with independent thread primitives, or they have received the synchronisation primitive upon which they were dependant. Synchronised threads have previously transitioned from a pending queue structure.

The Ready queue structures may contain scheduler node descriptors and independent and synchronised thread descriptors. The structure is largely defined during system initialisation although thread descriptors and dynamic scheduler tier descriptors are allowed to come and go in real time.

Ready queues may schedule threads to a specific processing resource 150, or a pool of processing resources 150. This enables load balancing across multiple processing resources 150 whilst maintaining the ability to target specific tasks at specific processing resources 150, for example hardware accelerators or IO devices.

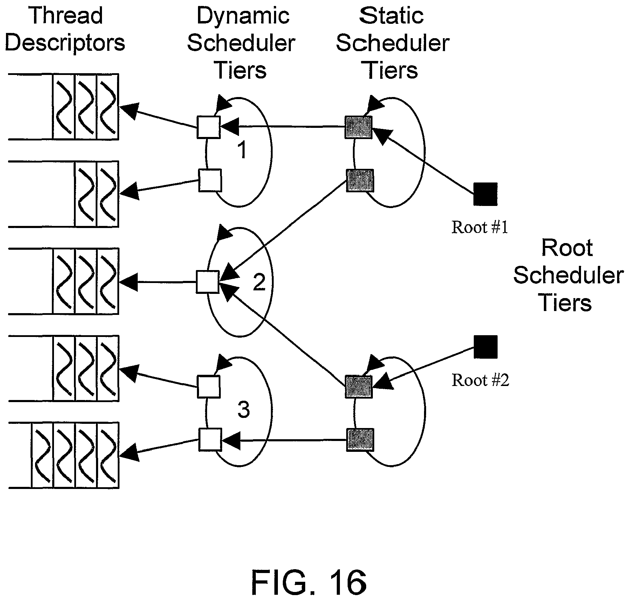

Figure 16 shows a typical Ready queue structure for two processing resources 150. Note that dynamic scheduler tier 2 is available to both root scheduler tiers. This enables the system management controller 130 to load balance threads beneath dynamic tier 2 between the processing resources 150 associated with root tiers 1 and 2.

Scheduler Tiers

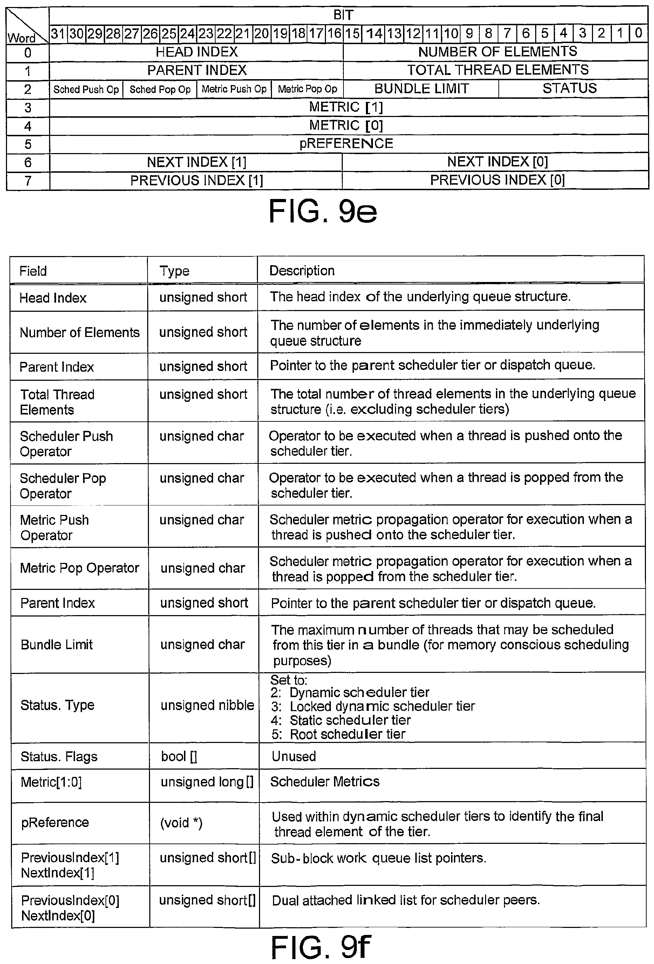

Scheduler tiers define the hierarchy used to schedule thread descriptors. Each scheduler tier typically defines a scheduling algorithm, some metrics used to determine scheduling decisions and a list of child elements that may be further scheduler tiers or thread descriptors. There are three types of scheduler tier descriptor; root, static and dynamic. The format of scheduler tier memory elements is shown in Figures 9e and 9f.

Root scheduler descriptors have a one-to-one mapping with dispatch queues. They represent the ultimate node in the Ready queue structure. Scheduler root descriptors are configured during system initialisation and exist in perpetuity.

Static Scheduler Descriptor exist beneath root nodes in the scheduling hierarchy. The parents of static scheduler descriptors may be other static scheduler descriptors or root descriptors. They compete with sibling nodes according to their parents' defined scheduler algorithm and their scheduler metrics. Static scheduler descriptors are configured during system initialisation and exist in perpetuity. During operation, the system management controller 130 maintains the scheduler metrics according to the selected scheduling algorithm, for example Round Robin scheduling.

Dynamic Scheduler Descriptors exist beneath root and possibly static nodes in the scheduling hierarchy. The parents of dynamic scheduler descriptors may be either static scheduler descriptors or root descriptors. They compete with sibling nodes according to their parents' defined scheduler algorithm and their own scheduler metrics. Dynamic Scheduler descriptors may be configured at any time and may be retired under specific circumstances. This enables the system to support a far higher number of scheduling tiers than would be possible with a purely static provision. The system management controller 130 achieves this by capitalising on the likelihood that, although over all time a large number and diversity of threads and dynamic scheduler tiers are used, during a finite period, the transient demand is smaller. For example, in a networking system with attached memory supporting a maximum of 4000 dynamic elements (threads and dynamic scheduler descriptors) it may be possible to support 16000 connections as at any instant in time, dataunits from only a fraction of the overall connection space will be resident in the controller. This flexibility is achieved with a small penalty in performance, since, if a dynamic scheduler descriptor is not present, it must be created prior to the addition of child thread descriptors.

During operation, the system management controller 130 maintains the scheduler metrics according to the selected scheduling algorithm. Under certain circumstances the dynamic scheduler descriptors will be released back to the controller memory element 195 free list. This is achieved by storing the pReference from the last thread to be processed within that tier within the dynamic scheduler tier descriptor. The controller 130 API supports the interrogation of controller memory elements 195 to determine whether a dynamic scheduler descriptor has persisted between subsequent similar threads.

Dispatch Queues

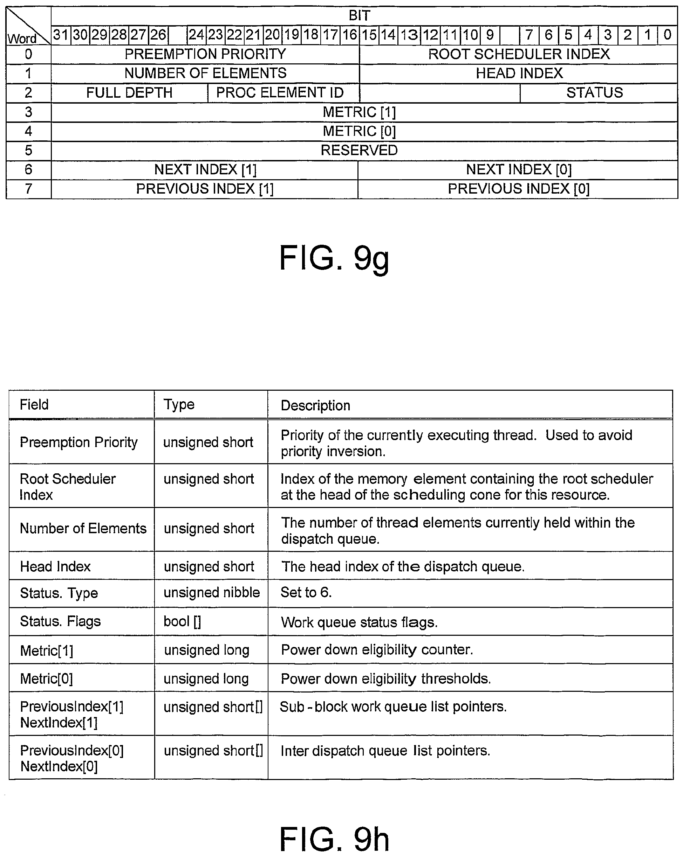

Dispatch queues hold scheduled thread descriptors in a First In First Out (FIFO) queue awaiting service from the associated processing resource 150. A maximum of 32 dispatch queues are allowed, in the currently preferred embodiment. Dispatch queues are defined by dispatch queue descriptors, shown in figure 9g and 9h. Dispatch queue descriptors are configured during system initialisation.

The process of transitioning a thread descriptor from a Ready queue structure to a dispatch queue structure is performed in hardware and requires no controller 130 API interaction.

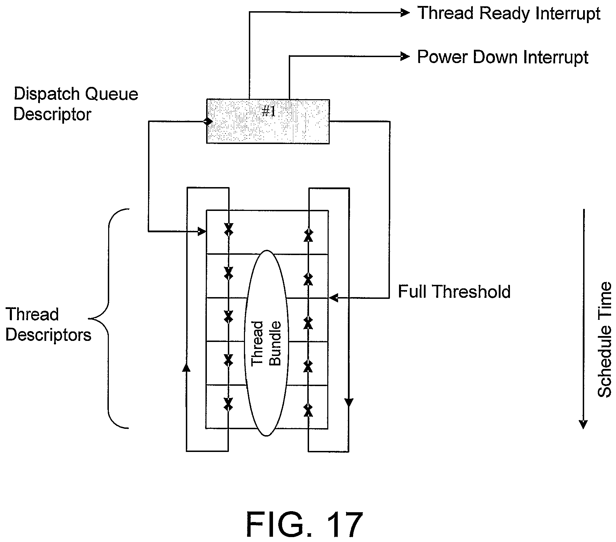

Figure 17 shows an exemplary embodiment of a typical single dispatch queue structure embodying features of the present invention. The Dispatch queue descriptor defines a full threshold. A dispatch queue length is only allowed to exceed the full threshold where a thread bundle is being scheduled or a pre-empted thread push is taking place.

Elements are removed from the dispatch queue via a pop operation called through the controller 130 API by a processing resource.

A priority field is included in the dispatch queue descriptor. When a thread is popped from the dispatch queue, the priority field is populated with the priority of the now-executing thread. A further API call enables the priority to be reset to another value by the executing processor, in order to avoid priority inversions. Priority inversion involves at least 3 threads of differing priority and describes a conflict between synchronisation and scheduling requirements. Priority inversion allows a lower priority thread to block a higher priority thread indefinitely. For example, a low priority thread locks a shared resource, and is then pre-empted by a higher priority thread. The higher priority thread then blocks on the resource that is locked by the low priority thread. Since the high priority thread is now blocked, normally the low priority thread would resume, were it not for the third medium thread, which is independent of the locked resource and is now free to run. The low priority thread never gets the opportunity to unlock the shared resource and therefore the high priority thread is blocked indefinitely. "Priority ceiling" protocol means that while a thread owns a shared resource, it runs at a specified priority. This ensures that the "low" priority thread as defined above, assumes a "high" priority whilst it owns the resource shared with the high priority thread.

Thread bundles describe a group of thread descriptors that originate from the same scheduler tier. A parameter is present in each scheduler descriptor defining the number of threads that may be transitioned from that tier of the ready queue to the dispatch queue before the scheduling decision is forced to update. By making use of this capability, and arranging that members of scheduler tiers share commonality, the processing resources 150 can be presented with blocks of threads that exhibit significantly higher cache locality than would otherwise be observed, resulting in a reduction in cache-misses and an increase in system performance.

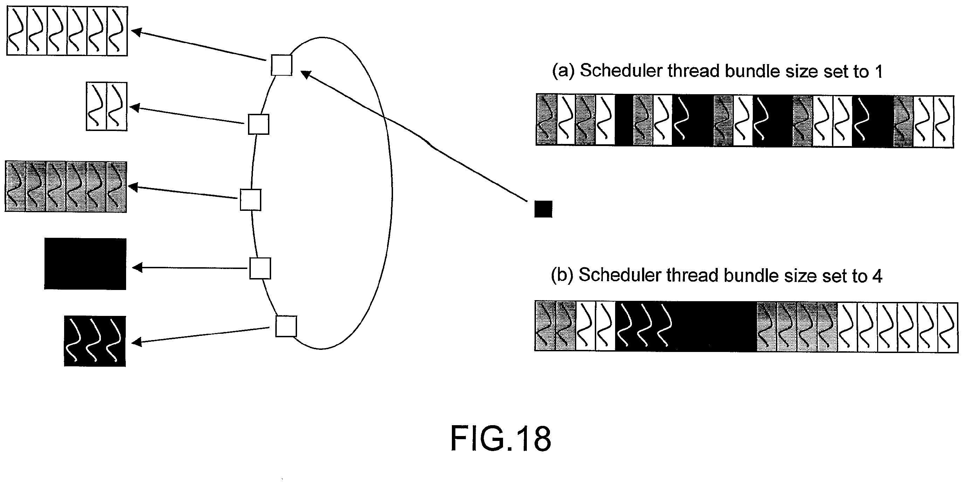

Figure 18 shows an exemplary two tier scheduling hierarchy, including thread bundling, according to an embodiment of the invention. The tier furthest from the root tier, the child tier, is using a FIFO scheduling algorithm. The root tier scheduler algorithm is configured as a round robin. In the embodiment, elements within each of the FIFO queues exhibit high levels of cache locality with other members of the same queue.

Figure 18(a) shows the scheduling results where the child tiers thread bundle limit is set to 1. The results are perfectly interleaved. This scheme presents minimum latency to each queue; however, it is the least memory conscious (i.e. the most likely to exhibit poor cache performance). Context switches are necessary after each scheduled thread. Should the root tier be associated with a processing resource 150 that uses caches, compulsory cache misses could impact system performance.

Figure 18(b) shows the scheduling results where the child tiers thread bundle limit is set to 4. The scheduler exhibits a courser grain update characteristic, which manifests itself as blocks of threads being scheduled from the same queues with a limit set by the thread bundle limit. Although this bursty behaviour may not be ideal in some circumstances, it exhibits a far better cache performance, as contexts switches are required comparatively infrequently. The resultant effect emulates the superior cache performance of a coarse grain multithreading whilst maintaining the superior programming model of the fine-grained approach.

It is likely that the bursty nature of thread bundling will be most undesirable where the system interacts with the outside world. However, thread bundling is only a benefit where the target processing resource 150 uses caches, therefore specialist processing resources 150, that interact with the outside world, for example an IO device, are unlikely to use cache technology and therefore will not make use of thread bundling.

Returning to figure 17, elements are removed from the dispatch queue via a pop operation called through the controller 130 API by a processing resource 150. Elements may be pushed back onto the ready queue in the event of pre-emption.

A priority field is included in the dispatch queue descriptor that enables implementation of the priority ceiling protocol, preventing priority inversions with shared data. Each processing resource 150 has a unique dispatch queue.

Scheduling

The requirements of scheduling for applications and systems vary widely and, indeed, may only become clear after testing in real operating environments. To accommodate this, the system management controller 130 delivers flexibility in both scheduling policy and the scheduling algorithms used, which may be modified and tuned throughout the multicore processor design phase.

Scheduling policies may be split into three types:

1. A cooperative scheduler relies on currently executing tasks to release the processing resource 150 prior to scheduling a new one. Although this type of system is consistent with minimisation of cold-cache effects (e.g. where the cache local to the processing resource 150 does not contain the required instruction, therefore must load the missing instruction in from a slower higher level memory), and fixed-function hardware accelerators it may not be suitable for more complex embedded applications.

2. A static algorithm-driven scheduler can pre-empt the currently executing task in order to execute a task of higher eligibility. The most eligible thread, according to pre-defined scheduling parameters and algorithms, is always the executing thread in these systems. The eligibility of any given task is fixed before the system begins execution.

3. A dynamic algorithm -driven scheduler can redefine eligibilities at run-time. As before, the currently running process is still of the highest eligibility, but the eligibility metrics may have been changed since the task commenced execution.

The system management controller 130 caters for all three scheduling policies via appropriate configuration and run-time interaction with the target application.

The system management controller 130 supports many scheduling algorithms found within both the operating system and communications communities. For example, first in first out queuing, priority queuing or weighted fair queuing. An appropriate choice of scheduling algorithm will exhibit demonstrable advantages, particularly where subjective quality metrics are involved.

Two scheduler metrics are provided within thread descriptors to support the scheduling behaviour within the system management controller 130. The first represents the priority of the thread in all cases and is used within a pending queue structure, priority based schedulers and a dispatch queue structure. Where necessary, the second is used to select between the individual thread and its peers. Furthermore either metric may be used to update metrics within the parent descriptor. The value placed within the second primitive of a thread descriptor must reflect the types of scheduling encountered in its scheduler hierarchy.

These two scheduler metrics are used in both the scheduler descriptors, and the thread descriptors. However, although thread metrics are calculated within the processing resources 150, this is not possible for scheduler tiers. Consequently, sufficient parameters must be passed from a given tier's scheduled thread to enable the scheduler tier to update its own metric. A set of instructions is defined for each scheduler tier which define how the metrics are propagated from child to parent.

With some attention to the overall scheduler hierarchy, complex combinations of scheduler algorithms may be easily created to provide sophisticated traffic and task management capabilities in application systems.

Parameter Inheritance Example

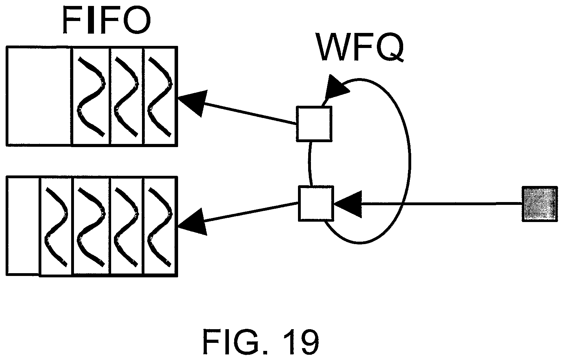

Figure 19 shows an exemplary embodiment of a simplified queue structure that might commonly be found in a communications system. The structure represents an output queue for an IO device. All threads sharing a FIFO queue are on the same connection, so this is a per connection queuing structure. The second scheduling tier uses a weighted fair queuing (WFQ) algorithm in this example. This algorithm calculates the finish time of a given task based on its length and a weighting factor. It then selects the packet with the earliest finish time. Although WFQ is reliant on knowledge of the length of the packet that the thread represents, the initial FIFO queue is independent of this information. In this case, the application programmer must ensure that the length of the packet is present in the scheduler metrics for each thread. Scheduler tiers higher in the hierarchy inherit this parameter for their own scheduling algorithms.

For WFQ the following variables are required:

| | |
|---|---|
| P | - Fraction of pipe bandwidth allocated to the connection |
| l | - Length of packet |
| B | - Overall pipe bandwidth |
| c | - Connection bandwidth |
| d | - Scheduler tier deadline |

The equation for calculating the connection bandwidth, *c*, is:

$$P*B=c$$

If we normalise the channel to a bandwidth of 1, then p becomes equal to c. The finish time of the processing of the packet, t, is then given by:

$$\frac{1}{p}*l=t$$

The metrics required are then 1/p and /. Since p was originally a fraction, both (1/p and I) of these values are integers. The length of the scheduled packet is passed up through the scheduler hierarchy, progressively updating the tier's deadline. In full, the calculation performed within each update is:

$$d=d+\left\lceil\frac{1}{p}*l\right\rceil$$

Where d and 1/p (the *weight)* are stored within the scheduler tier descriptor and I is passed through the hierarchy during a schedule update. This calculation is performed within the scheduler manager 330.

Whilst a specific embodiment of the invention has been described, it is to be understood that this is by way of example only and that various modifications may be considered. Moreover, the invention is of general application in any device or application that employs a multicore processor, such as, but not limited to, a mobile telephone or voice over Internet Protocol (VoIP) for example. Therefore, the specific embodiment is not to be seen as limiting of the scope of protection which is to be determined by the following claims.

**Claims**

1. A resource management and task allocation controller (130) for installation in a multicore processor having a plurality of interconnected processor elements (150) providing resources for processing executable transactions, at least one of said elements being a master processing unit, the master processing unit being logically separate from said controller and adapted to carry out allocation of executable transactions;
the controller being adapted to communicate, when installed, with each of the processor elements including the master processing unit, and comprising control logic for allocating executable transactions within the multicore processor to particular processor elements in accordance with pre-defined allocation parameters, said controller being operative to activate the control logic so as to allocate executable transactions when initialised;
wherein either the controller or the master processing unit may be configured to have master status and wherein the controller or the master processing unit that is configured to have master status carries out the allocation of executable transactions;
wherein the master processing unit is configured to have master status at turning on of the multicore processor, and wherein the controller is configured to assume master status from the master processor during an initialisation sequence.

2. The controller of claim 1, wherein the range of predefined allocation parameters included within the control logic of the controller contains a plurality of transaction scheduling rules, for scheduling the timing and/or order of execution of the executable transactions by the processor elements.

3. The controller of claim 1 or claim 2, wherein the range of predefined allocation parameters included within the control logic of the controller contains a plurality of system management rules, for controlling the manner in which the executable transactions are executed by the processor elements.

4. The controller of claim 2 or claim 3, further configured to generate instructions for communication to the processing elements.

5. The controller of claim 4, configured to send a processor element configuration instruction to a processor element, which causes the said processor element in turn to be adapted so as to permit subsequent execution of an executable transaction allocated to that processor element by the controller.

6. The controller of claim 4 or claim 5, configured to generate instructions by the transmission of one or more interrupts to the processor elements.

7. The controller of claim 4 or claim 5, configured to generate instructions by the transmission of one or more polls to the processor elements.

8. The controller of any preceding claim, wherein said control logic further comprises:

   an executable transaction manager; and;
   a dedicated memory manager (340);

   wherein the said dedicated memory manager controls access by the executable transaction manager to a dedicated memory (190).

9. The controller of claim 8, wherein the executable transaction manager further comprises an executable transaction input manager (300), configured to maintain an indication of available memory within the dedicated memory.

10. The controller of claim 9, wherein the executable transaction input manager is configured to maintain a list of available memory locations within the dedicated memory.

11. The controller of claim 10, wherein the executable transaction input manager maintains the indication of available memory as a result of updated instructions from the dedicated memory manager.

12. The controller of any preceding claim, wherein the executable transaction to be allocated include threads, each of which form part of an application being executed upon the multicore processor, wherein at least some of the threads are independent threads capable of execution independently of other events, and wherein at least others of the threads are dependent threads, whose execution is dependent upon the existence of a predetermined event.

13. The controller of claim 12, wherein the control logic further comprises a time manager (360) configured to provide timer functions to said executable transaction manager.

14. The controller of claim 13, wherein the predetermined event is a timing event.

15. The controller of claim 12, wherein the predetermined event is the completion of the execution of a previous thread, or pre-emption by another more eligible thread.

16. The controller of claim 12, wherein the executable transaction manager further comprises an executable transaction synchronisation manager (310), configured to maintain at least one pending queue list within the dedicated memory, indicative of dependent threads awaiting the occurrence of a predetermined event, and at least one timer queue list within the dedicated memory, indicative of threads awaiting a timing event.

17. The controller of claim 16, wherein the executable transaction manager further comprises an executable transaction output manager (320) configured to maintain a plurality of dispatch queue structures within the dedicated memory, indicative of the threads awaiting execution on an associated one of the processor elements, and to maintain a plurality of ready queue structures within the dedicated memory, indicative of threads awaiting allocation to a one of the processor elements for execution there.

18. The controller of claim 17, wherein the executable transaction manager further comprises an executable transaction schedule manager (330), configured to provide and maintain scheduling decisions for prioritising the dispatch of threads from within the ready queues to the dispatch queue for each processor element.

19. The controller of any preceding claim, wherein the control logic further comprises a system interface manager (380), in communication with the executable transaction manager, and configured to manage access by the controller to the multicore processor.

20. The controller of claim 19, wherein the system interface manager is arranged to provide interconnect interfacing and configuration and run-time access to said executable transaction manager.

21. The controller of claim 6, wherein the control logic further comprises a system interrupt manager (350), for converting system interrupts in a first format employed within the multicore processor, into controller interrupts in a second, different format, which second format is understandable by the executable transaction manager.

22. A multicore processor comprising the controller of any preceding claim, the multicore processor having a plurality of interconnected processor elements (150), and at least one controller client (120), wherein the controller client is configured to control communications between the processing elements and the rest of the multicore processor, dependent upon control signals from the controller.

23. The multicore processor of claim 22, wherein each of the plurality of interconnected processor elements (150) has an associated controller client (120), wherein each controller client is configured to control communications between the respective processing element and the rest of the multicore processor, dependent upon control signals from the controller.

24. The multicore processor of claim 22, further comprising a shared system interconnect (160) accessible by both the controller and the plurality of interconnected processor elements.

25. The processor of claim 24, further comprising an external interface, for connecting said multicore processor to one or more external devices.

26. A multicore processor as claimed in any of claims 22 to 25, further comprising a dedicated memory (190) in communication with the controller.

27. The multicore processor of claim 26, wherein the dedicated memory is exclusively accessible by the controller.

28. The multicore processor of claim 26, wherein the dedicated memory is accessible by both the controller and by at least one further component of the multicore processor.

29. The multicore processor of any of claims 26 to 27, wherein the dedicated memory comprises a plurality of individual memory elements (195).

30. The multicore processor of claim 29, wherein the number of individual memory elements is user definable.

31. The multicore processor of claim 30, wherein each memory element is of a similar size and the user definable number of memory elements results in a variable memory size.

32. The multicore processor of claim 22, wherein the controller client is a software application running on the associated processor element.

33. The multicore processor of claim 22, wherein the controller client is a hardware controller client, dependent on the functionality of the associated processor element.

34. The multicore processor of claim 33, wherein the controller client further comprises a client control logic, for controlling the associated processor element, upon activation by a control signal from the said controller.

35. The multicore processor of claim 34, wherein the controller client further comprises a plurality of buffers (510, 520), for temporary storage of communication messages sent between the said processor element and the rest of the multicore processor.

36. The multicore processor of claim 35, wherein the plurality of buffers are first in first out buffers.

37. The multicore processor of claim 35, wherein the controller client further comprises a plurality of memory elements (540, 560), each configured to store an address.

38. The multicore processor of claim 37, wherein the controller client further comprises a plurality of comparators (530), each comparator configured to compare an address generated by the associated processor element (540) with an address stored in a one of the memory elements.

**39.** The multicore processor of claim 37, wherein the controller client further comprises a subtractor (550), configured to subtract an address stored in a one of the memory elements (560) from an address generated by the associated processor element.

**40.** A method of controlling and allocating resources within a multicore processor having a plurality of processor elements (150), at least one of which is a master processing unit, the master processing unit having master status at turning on of the multicore processor for carrying out allocation of executable transactions within the multicore processor, the method comprising the steps of:

assuming master status at a resource management and task allocation controller (130), logically separate from the master processing unit, during an initialisation sequence;
receiving an executable transaction at the resource management and task allocation controller (130); and
allocating by the resource management and task allocation controller (130) that executable transaction to a one of the processor elements independently of master processing unit control.

**41.** The method of claim 40, further comprising:
directing the executable transaction to a one of the processor elements via a transaction management client (120).

**42.** The method of claim 41, wherein the transaction management client is a hardware client.

**43.** The method of claim 41, wherein the transaction management client is a software client.

**44.** The method of claim 42, further comprising storing a predetermined address within the transaction management client.

**45.** The method of claim 44, further comprising: at the transaction management client, subtracting the predetermined address from an address generated by the associated processing element to produce a normalised address.

**46.** The method of claim 44, further comprising, at the transaction management client, comparing an address generated by the associated processor element with the stored predetermined address; and
configuring the associated processor element dependent on the result of the comparison.

**47.** The method of claim 42, further comprising, at the transaction management client, storing the whole of a communication message from the rest of the multicore processor to an associated processor element; and
subsequently passing the whole message to the associated processor element.

**48.** The method of claim 42, further comprising, at the transaction management client, streaming communication messages from the rest of the multicore processor to the associated processor element.

**49.** The method of claim 41, further comprising creating, executing or deleting an executable transaction for a first transaction management client, with a second transaction management client.

**50.** The method of any of claims 40 to 49, further comprising allocating the executable transaction to a one of the processing elements based upon a pre-defined set of scheduling parameters.

**51.** The method of claim 50, wherein the set of scheduling parameters is user-definable.

**52.** The method of claim 50 or claim 51, further comprising:
monitoring a list of the scheduling parameters for use by the controller.

**53.** The method of any of claims 50 to 52, further comprising altering the set of scheduling parameters over time.

**54.** The method of claim 52, wherein the step of monitoring the list of the scheduling parameters further comprises maintaining a list of ready tasks that may be carried out by one or more of the processor elements.

**55.** The method of any of claims 50 to 53, further comprising allocating the executable transaction to a one of the processing elements on the basis of the requirement to balance processor resources within the multicore processor.

**56.** The method of any of claims 50 to 53, further comprising preventing the allocation of the executable transaction to a one of the processor elements, when it is determined that it is desirable for that processor element to execute a higher priority task.

**57.** The method of any of claims 40 to 56, further comprising:
maintaining a list of executable transactions that have not been allocated for longer that a predetermined length of time.

**58.** The method of claim 52, wherein the step of monitoring the list of the scheduling parameters further comprises maintaining a list of pending tasks that are awaiting a predetermined event.

**59.** The method of claim 58, wherein the predetermined event is a timer event, a synchronisation event or both.

**60.** The method of claim 58, further comprising maintaining a plurality of lists of pending tasks, according to mutually exclusive predetermined events.

**61.** The method of claim 52, wherein the step of monitoring the list of the scheduling parameters further comprises maintaining a list of dispatched tasks that are awaiting execution on a particular processing resource.

**62.** The method of claim 61, further comprising the step of moving a executable transaction awaiting a predetermined event to the ready queue, on expiration of a timeout.

**63.** The method of any of claims 40 to 62 wherein the controller is exclusively dedicated to the allocation of tasks.

**Patentansprüche**

**1.** Ressourcenverwaltungs- und Aufgabenzuweisungssteuerung (130) zur Installation in einem Multicore-Prozessor mit einer Mehrzahl von untereinander verbundenen Prozessorelementen (150), die Ressourcen zum Verarbeiten ausführbarer Transaktionen bereitstellen, wobei mindestens eines der Elemente eine Master-Verarbeitungseinheit ist, wobei die Master-Verarbeitungseinheit logisch von der Steuerung getrennt und zum Durchführen der Zuordnung ausführbarer Transaktionen geeignet ist;
wobei die Steuerung angepasst ist, um, wenn sie installiert ist, mit jedem der Prozessorelemente zu kommunizieren, die die Master-Verarbeitungseinheit einschließen, und die Steuerlogik umfasst, um ausführbare Transaktionen innerhalb des Multicore-Prozessors bestimmten Prozessorelementen gemäß vordefinierten Zuordnungsparametern zuzuweisen, wobei die Steuerung in der Lage ist, die Steuerlogik zu aktivieren, um ausführbare Transaktionen zuzuweisen, wenn sie initialisiert wird;
wobei entweder die Steuerung oder die Master-Verarbeitungseinheit konfiguriert werden kann, um den Master-Status zu haben, und wobei die Steuerung oder die Master-Verarbeitungseinheit, die konfiguriert ist, um den Master-Status zu haben, die Zuweisung ausführbarer Transaktionen durchführt;
wobei die Master-Verarbeitungseinheit konfiguriert ist, um beim Einschalten des Multicore-Prozessors den Master-Status vorliegen zu haben, und wobei die Steuerung konfiguriert ist, um während einer Initialisierungssequenz den Master-Status vom Master-Prozessor anzunehmen.

**2.** Steuerung nach Anspruch 1, wobei der Bereich der vordefinierten Zuordnungsparameter, die in der Steuerlogik der Steuerung eingeschlossen sind, eine Mehrzahl von Transaktionsplanungsregeln enthält, um den Zeitpunkt und/oder die Reihenfolge der Ausführung der ausführbaren Transaktionen durch die Prozessorelemente zu planen.

**3.** Steuerung nach Anspruch 1 oder Anspruch 2, wobei der Bereich der vordefinierten Zuordnungsparameter, die in der Steuerlogik der Steuerung eingeschlossen sind, eine Mehrzahl von Systemverwaltungsregeln enthält, um die Art und Weise zu steuern, wie die ausführbaren Transaktionen durch die Prozessorelemente ausgeführt werden.

**4.** Steuerung nach Anspruch 2 oder Anspruch 3, die ferner konfiguriert ist, um Anweisungen zur Kommunikation mit den Verarbeitungselementen zu erzeugen.

**5.** Steuerung nach Anspruch 4, die konfiguriert ist, um einen Konfigurationsvorgang für ein Prozessorelement an ein Prozessorelement zu senden, was wiederum bewirkt, dass das Prozessorelement angepasst wird, um eine nachfolgende Ausführung einer ausführbaren Transaktion zu ermöglichen, die diesem Prozessorelement von der Steuerung zugewiesen wird.

**6.** Steuerung nach Anspruch 4 oder Anspruch 5, die konfiguriert ist, um Anweisungen durch die Übertragung eines oder mehrerer Interrupts an die Prozessorelemente zu erzeugen.

**7.** Steuerung nach Anspruch 4 oder Anspruch 5, die konfiguriert ist, um Anweisungen durch die Übertragung einer oder mehrerer Abfragen an die Prozessorelemente zu erzeugen.

**8.** Steuerung nach einem vorangehenden Anspruch, wobei die Steuerlogik ferner umfasst:

einen ausführbaren Transaktionsmanager; und
einen dedizierten Speichermanager (340);

wobei der dedizierte Speichermanager den Zugriff durch den ausführbaren Transaktionsmanager auf einen dedizierten Speicher (190) steuert.

**9.** Steuerung nach Anspruch 8, wobei der ausführbare Transaktionsmanager ferner einen ausführbaren Transaktionseingabemanager (300) umfasst, der konfiguriert ist, um eine Anzeige des verfügbaren Speichers innerhalb des dedizierten Speichers aufrechtzuerhalten.

**10.** Steuerung nach Anspruch 9, wobei der ausführbare Transaktionseingabemanager konfiguriert ist, um eine Liste der verfügbaren Speicherplätze innerhalb des dedizierten Speichers aufrechtzuerhalten.

**11.** Steuerung nach Anspruch 10, wobei der ausführbare Transaktionseingabemanager die Anzeige des verfügbaren Speichers als Ergebnis aktualisierter Anweisungen von dem dedizierten Speichermanager aufrechterhält.

**12.** Steuerung nach einem vorangehenden Anspruch, wobei die zuzuordnende ausführbare Transaktion Threads beinhaltet, von denen jeder Teil einer Anwendung ist, die auf dem Multicore-Prozessor ausgeführt wird, wobei mindestens einige der Threads unabhängige Threads sind, die zur Ausführung fähig sind, unabhängig von anderen Ereignissen, und wobei mindestens andere der Threads abhängige Threads sind, deren Ausführung von der Existenz eines vorbestimmten Ereignisses abhängig ist.

**13.** Steuerung nach Anspruch 12, wobei die Steuerlogik ferner einen Zeitmanager (360) umfasst, der konfiguriert ist, um dem ausführbaren Transaktionsmanager Timerfunktionen bereitzustellen.

**14.** Steuerung nach Anspruch 13, wobei das vorbestimmte Ereignis ein Zeitereignis ist.

**15.** Steuerung nach Anspruch 12, wobei das vorbestimmte Ereignis der Abschluss der Ausführung eines vorherigen Threads oder die Vorwegnahme durch einen anderen, geeigneteren Thread ist.

**16.** Steuerung nach Anspruch 12, wobei der ausführbare Transaktionsmanager ferner einen ausführbaren Transaktionssynchronisationsmanager (310) umfasst, der konfiguriert ist, um mindestens eine ausstehende Warteschlangenliste innerhalb des dedizierten Speichers, die abhängige Threads anzeigt, die auf das Eintreten eines vorbestimmten Ereignisses warten, und mindestens eine Timerwarteschlangenliste innerhalb des dedizierten Speichers, die auf Threads hinweist, die auf ein Zeitereignis warten, aufrechtzuerhalten.

**17.** Steuerung nach Anspruch 16, wobei der ausführbare Transaktionsmanager ferner einen ausführbaren Transaktionsausgabemanager (320) umfasst, der konfiguriert ist, um eine Mehrzahl von Versandwarteschlangenstrukturen innerhalb des dedizierten Speichers aufrechtzuerhalten, die die auf Threads hinweisen, die Ausführung auf einem zugeordneten der Prozessorelemente warten, und um eine Mehrzahl von Bereitschaftwarteschlangenstrukturen innerhalb des dedizierten Speichers aufrechtzuerhalten, die auf Threads hinweisen, die auf die Zuordnung zu einem der Prozessorelemente zur dortigen Ausführung warten.

**18.** Steuerung nach Anspruch 17, wobei der ausführbare Transaktionsmanager ferner einen ausführbaren Transaktionsplanungsmanager (330) umfasst, der konfiguriert ist, um Planungsentscheidungen zum Priorisieren des Versands von Threads von innerhalb der Bereitschaftswarteschlangen bis zur Versandwarteschlange für jedes Prozessorelement bereitzustellen und aufrechtzuerhalten.

19. Steuerung nach einem vorangehenden Anspruch, wobei die Steuerlogik ferner einen Systemschnittstellenmanager (380) in Kommunikation mit dem ausführbaren Transaktionsmanager umfasst und konfiguriert ist, um den Zugriff der Steuerung auf den Multicore-Prozessor zu verwalten.

20. Steuerung nach Anspruch 19, wobei der Systemschnittstellenmanager angeordnet ist, um eine Verbindungsschnittstelle und eine Konfiguration und einen Laufzeitzugriff auf den ausführbaren Transaktionsmanager bereitzustellen.

21. Steuerung nach Anspruch 6, wobei die Steuerlogik ferner einen Systemunterbrechungsmanager (350) zum Umwandeln von Systemunterbrechungen in einem ersten Format, das innerhalb des Multicore-Prozessors verwendet wird, in Steuerunterbrechungen in einem zweiten, unterschiedlichen Format umfasst, wobei das zweite Format für den ausführbaren Transaktionsmanager verständlich ist.

22. Multicore-Prozessor, umfassend die Steuerung nach einem vorangehenden Anspruch, der Multicore-Prozessor mit einer Mehrzahl von untereinander verbundenen Prozessorelementen (150) und mindestens einem Steuerungsclient (120), wobei der Steuerungsclient konfiguriert ist, um die Kommunikation zwischen den Verarbeitungselementen und dem Rest des Multicore-Prozessors in Abhängigkeit von Steuersignalen der Steuerung zu steuern.

23. Multicore-Prozessor nach Anspruch 22, wobei jedes der Mehrzahl von untereinander verbundenen Prozessorelementen (150) einen zugehörigen Steuerungsclient (120) aufweist, wobei jeder Steuerungsclient konfiguriert ist, um die Kommunikation zwischen dem jeweiligen Verarbeitungselement und dem Rest des Multicore-Prozessors in Abhängigkeit von Steuersignalen der Steuerung zu steuern.

24. Multicore-Prozessor nach Anspruch 22, ferner umfassend eine gemeinsame Systemverbindung (160), die sowohl durch die Steuerung als auch durch die Mehrzahl der untereinander verbundenen Prozessorelemente zugänglich ist.

25. Prozessor nach Anspruch 24, ferner umfassend eine externe Schnittstelle, zum Verbinden des Multicore-Prozessors mit einer oder mehreren externen Vorrichtungen.

26. Multicore-Prozessor nach einem der Ansprüche 22 bis 25, ferner umfassend einen speziellen Speicher (190) in Kommunikation mit der Steuerung.

27. Multicore-Prozessor nach Anspruch 26, wobei der dedizierte Speicher ausschließlich durch die Steuerung zugänglich ist.

28. Multicore-Prozessor nach Anspruch 26, wobei der dedizierte Speicher sowohl von der Steuerung als auch von mindestens einer weiteren Komponente des Multicore-Prozessors zugänglich ist.

29. Multicore-Prozessor nach einem der Ansprüche 26 bis 27, wobei der dedizierte Speicher eine Mehrzahl von einzelnen Speicherelementen (195) umfasst.

30. Multicore-Prozessor nach Anspruch 29, wobei die Anzahl der einzelnen Speicherelemente benutzerdefinierbar ist.

31. Multicore-Prozessor nach Anspruch 30, wobei jedes Speicherelement eine ähnliche Größe aufweist und die benutzerdefinierbare Anzahl von Speicherelementen zu einer variablen Speichergröße führt.

32. Multicore-Prozessor nach Anspruch 22, wobei der Steuerungsclient eine Softwareanwendung ist, die auf dem zugehörigen Prozessorelement läuft.

33. Multicore-Prozessor nach Anspruch 22, wobei der Steuerungsclient ein Hardware-Controller-Client ist, abhängig von der Funktionalität des zugehörigen Prozessorelements.

34. Multicore-Prozessor nach Anspruch 33, wobei der Steuerungsclient ferner eine Client-Steuerlogik zum Steuern des zugehörigen Prozessorelements bei Aktivierung durch ein Steuersignal von der Steuerung umfasst.

35. Multicore-Prozessor nach Anspruch 34, wobei der Steuerungsclient ferner eine Mehrzahl von Puffern (510, 520) zum temporären Speichern von Kommunikationsnachrichten umfasst, die zwischen dem Prozessorelement und dem Rest des Multicore-Prozessors gesendet werden.

36. Multicore-Prozessor nach Anspruch 35, wobei die Mehrzahl von Puffern zuerst in First-Out-Puffern sind.

37. Multicore-Prozessor nach Anspruch 35, wobei der Steuerungsclient ferner eine Mehrzahl von Speicherelementen (540, 560) umfasst, die jeweils zum Speichern einer Adresse konfiguriert sind.

38. Multicore-Prozessor nach Anspruch 37, wobei der Steuerungsclient ferner eine Mehrzahl von Komparatoren (530) umfasst, wobei jeder Komparator konfiguriert ist, um eine durch das zugehörige Prozessorelement (540) erzeugte Adresse mit einer in einem der Speicherelemente gespeicherten Adresse zu vergleichen.

39. Multicore-Prozessor nach Anspruch 37, wobei der Steuerungsclient ferner einen Subtrahierer (550) umfasst, der konfiguriert ist, um eine in einem der Speicherelemente (560) gespeicherte Adresse von einer durch das zugehörige Prozessorelement erzeugten Adresse zu subtrahieren.

40. Verfahren zum Steuern und Zuweisen von Ressourcen innerhalb eines Multicore-Prozessors mit einer Mehrzahl von Prozessorelementen (150), von denen mindestens eines eine Master-Verarbeitungseinheit ist, wobei die Master-Verarbeitungseinheit beim Einschalten des Multicore-Prozessors den Masterstatus aufweist, um die Zuweisung von ausführbaren Transaktionen innerhalb des Multicore-Prozessors durchzuführen, wobei das Verfahren die folgenden Schritte umfasst:

Vermuten des Masterstatus an einer Ressourcenverwaltungs- und Aufgabenzuweisungssteuerung (130), die logisch von der Master-Verarbeitungseinheit getrennt ist, während einer Initialisierungssequenz;
Empfangen einer ausführbaren Transaktion an der Ressourcenverwaltungs- und Aufgabenzuweisungssteuerung (130); und
Zuordnen dieser ausführbaren Transaktion zu einem der Prozessorelemente durch die Ressourcenverwaltungs- und Aufgabenzuweisungssteuerung (130) unabhängig von der Steuerung der Hauptverarbeitungseinheit.

41. Verfahren nach Anspruch 40, ferner umfassend:
Leiten der ausführbaren Transaktion zu einem der Prozessorelemente über einen Transaktionsverwaltungsclient (120).

42. Verfahren nach Anspruch 41, wobei der Transaktionsverwaltungsclient ein Hardware-Client ist.

43. Verfahren nach Anspruch 41, wobei der Transaktionsverwaltungsclient ein Software-Client ist.

44. Verfahren nach Anspruch 42, ferner umfassend das Speichern einer vorbestimmten Adresse innerhalb des Transaktionsverwaltungsclients.

45. Verfahren nach Anspruch 44, ferner umfassend: beim Transaktionsverwaltungsclient das Subtrahieren der vorbestimmten Adresse von einer durch das zugehörige Verarbeitungselement erzeugten Adresse, um eine normalisierte Adresse zu erzeugen.

46. Verfahren nach Anspruch 44, ferner umfassend das Vergleichen einer durch das zugehörige Prozessorelement erzeugten Adresse mit der gespeicherten vorbestimmten Adresse am Transaktionsverwaltungsclient; und Konfigurieren des zugehörigen Prozessorelements in Abhängigkeit vom Ergebnis des Vergleichs.

47. Verfahren nach Anspruch 42, ferner umfassend das Speichern der gesamten Kommunikationsnachricht aus dem Rest des Multicore-Prozessors an ein zugehöriges Prozessorelement am Transaktionsverwaltungsclient; und anschließend das Weiterleiten der gesamten Nachricht an das zugeordnete Prozessorelement.

48. Verfahren nach Anspruch 42, ferner umfassend das Streaming von Kommunikationsnachrichten aus dem Rest des Multicore-Prozessors zu dem zugehörigen Prozessorelement am Transaktionsverwaltungsclient.

49. Verfahren nach Anspruch 41, ferner umfassend das Erstellen, Ausführen oder Löschen einer ausführbaren Transaktion für einen ersten Transaktionsverwaltungsclient mit einem zweiten Transaktionsverwaltungsclient.

**50.** Verfahren nach einem der Ansprüche 40 bis 49, ferner umfassend das Zuordnen der ausführbaren Transaktion zu einem der Verarbeitungselemente basierend auf einem vordefinierten Satz von Planungsparametern.

**51.** Verfahren nach Anspruch 50, wobei der Satz von Planungsparametern benutzerdefinierbar ist.

**52.** Verfahren nach Anspruch 50 oder Anspruch 51, ferner umfassend:
Überwachen einer Liste der Terminierungsparameter zur Verwendung durch die Steuerung.

**53.** Verfahren nach einem der Ansprüche 50 bis 52, ferner umfassend das Ändern des Satzes von Planungsparametern im Laufe der Zeit.

**54.** Verfahren nach Anspruch 52, wobei der Schritt des Überwachens der Liste der Planungsparameter ferner das Aufrechterhalten einer Liste von fertigen Aufgaben umfasst, die von einem oder mehreren der Prozessorelemente ausgeführt werden können.

**55.** Verfahren nach einem der Ansprüche 50 bis 53, ferner umfassend das Zuordnen der ausführbaren Transaktion zu einem der Verarbeitungselemente auf Basis der Anforderung, Prozessorressourcen innerhalb des Mehrkernprozessors auszugleichen.

**56.** Verfahren nach einem der Ansprüche 50 bis 53, ferner umfassend das Verhindern der Zuordnung der ausführbaren Transaktion zu einem der Prozessorelemente, wenn bestimmt wird, dass es für dieses Prozessorelement wünschenswert ist, eine Aufgabe mit höherer Priorität auszuführen.

**57.** Verfahren nach einem der Ansprüche 40 bis 56, ferner umfassend:
Aufrechterhalten einer Liste von ausführbaren Transaktionen, die nicht länger als eine vorbestimmte Zeitspanne zugeordnet wurden.

**58.** Verfahren nach Anspruch 52, wobei der Schritt des Überwachens der Liste der Planungsparameter ferner das Aufrechterhalten einer Liste von anhängigen Aufgaben umfasst, die auf ein vorgegebenes Ereignis warten.

**59.** Verfahren nach Anspruch 58, wobei das vorbestimmte Ereignis ein Timerereignis, ein Synchronisationsereignis oder beides ist.

**60.** Verfahren nach Anspruch 58, ferner umfassend das Aufrechterhalten einer Vielzahl von Listen von anhängigen Aufgaben gemäß sich gegenseitig ausschließender vorgegebener Ereignisse.

**61.** Verfahren nach Anspruch 52, wobei der Schritt des Überwachens der Liste der Planungsparameter ferner das Aufrechterhalten einer Liste von ausgeführten Aufgaben umfasst, die auf die Ausführung an einer bestimmten Verarbeitungsressource warten.

**62.** Verfahren nach Anspruch 61, ferner umfassend den Schritt des Verschiebens einer ausführbaren Transaktion, die auf ein vorgegebenes Ereignis wartet, in die Bereitschaftswarteschlange nach Ablauf eines Timeout.

**63.** Verfahren nach einem der Ansprüche 40 bis 62, worin die Steuerung ausschließlich der Zuordnung von Aufgaben gewidmet ist.

**Revendications**

**1.** Contrôleur de gestion de ressources et d'allocation de tâches (130) destiné à être installé dans un processeur multicoeur ayant une pluralité d'éléments de processeur interconnectés (150) fournissant des ressources pour le traitement de transactions exécutables, au moins l'un desdits éléments étant une unité de traitement maîtresse, l'unité de traitement maîtresse étant logiquement séparée dudit contrôleur et adaptée pour effectuer une allocation de transactions exécutables ;
le contrôleur étant adapté pour communiquer, lorsqu'il est installé, avec chacun des éléments de processeur, y compris l'unité de traitement maîtresse, et comprenant une logique de commande pour allouer des transactions exécutables dans le processeur multicoeur à des éléments de processeur particuliers en fonction des paramètres d'allocation prédéfinis, ledit contrôleur pouvant fonctionner pour activer la logique de commande de manière à allouer des transactions exécutables lors de l'initialisation ;
dans lequel le contrôleur ou l'unité de traitement maîtresse peut être configuré(e) pour avoir un état maître et dans lequel le contrôleur ou l'unité de traitement maîtresse qui est configuré(e) pour avoir l'état maître effectue l'allocation de transactions exécutables ;
dans lequel l'unité de traitement maîtresse est configurée pour avoir un état maître lors de l'activation du processeur multicoeur, et dans lequel le contrôleur est configuré pour adopter l'état maître à partir du processeur maître pendant une séquence d'initialisation.

2.  Contrôleur de la revendication 1, dans lequel la plage de paramètres d'allocation prédéfinis incluse dans la logique de commande du contrôleur contient une pluralité de règles d'ordonnancement de transactions, pour ordonnancer la temporisation et/ou l'ordre d'exécution des transactions exécutables par les éléments de processeur.

3.  Contrôleur de la revendication 1 ou 2, dans lequel la plage de paramètres d'allocation prédéfinis incluse dans la logique de commande du contrôleur contient une pluralité de règles de gestion de système, pour commander la manière dont les transactions exécutables sont exécutées par les éléments de processeur.

4.  Contrôleur de la revendication 2 ou 3, configuré en outre pour générer des instructions de communication aux éléments de traitement.

5.  Contrôleur de la revendication 4, configuré pour envoyer une instruction de configuration d'élément de processeur à un élément de processeur, ce qui amène ledit élément de processeur d'être adapté, à son tour, de manière à permettre l'exécution ultérieure d'une transaction exécutable allouée à cet élément de processeur par le contrôleur.

6.  Contrôleur de la revendication 4 ou 5, configuré pour générer des instructions par la transmission d'une ou de plusieurs interruptions aux éléments de processeur.

7.  Contrôleur de la revendication 4 ou 5, configuré pour générer des instructions par la transmission d'une ou de plusieurs interrogations aux éléments de processeur.

8.  Contrôleur de l'une des revendications précédentes, dans lequel ladite logique de commande comprend en outre :

    un gestionnaire de transactions exécutables ; et ;
    un gestionnaire de mémoire dédiée (340) ;
    dans lequel ledit gestionnaire de mémoire dédiée commande l'accès par le gestionnaire de transactions exécutables à une mémoire dédiée (190).

9.  Contrôleur de la revendication 8, dans lequel le gestionnaire de transactions exécutables comprend en outre un gestionnaire d'entrée de transactions exécutables (300), configuré pour maintenir une indication de la mémoire disponible dans la mémoire dédiée.

10. Contrôleur de la revendication 9, dans lequel le gestionnaire d'entrée de transactions exécutables est configuré pour maintenir une liste d'emplacements de mémoire disponible dans la mémoire dédiée.

11. Contrôleur de la revendication 10, dans lequel le gestionnaire d'entrée de transactions exécutables maintient l'indication de la mémoire disponible en conséquence d'instructions mises à jour provenant du gestionnaire de mémoire dédiée.

12. Contrôleur de l'une des revendications précédentes, dans lequel la transaction exécutable à allouer comporte des fils d'exécution, dont chacun fait partie d'une application exécutée sur le processeur multicoeur, dans lequel au moins certains des fils d'exécution sont des fils d'exécution indépendants pouvant être exécutés indépendamment des autres événements, et dans lequel au moins d'autres des fils d'exécution sont des fils d'exécution dépendants, dont l'exécution dépend de l'existence d'un événement prédéterminé.

13. Contrôleur de la revendication 12, dans lequel la logique de commande comprend en outre un gestionnaire de temps (360) configuré pour fournir des fonctions de temporisateur audit gestionnaire de transactions exécutables.

14. Contrôleur de la revendication 13, dans lequel l'événement prédéterminé est un événement de temporisation.

**15.** Contrôleur de la revendication 12, dans lequel l'événement prédéterminé est l'achèvement de l'exécution d'un fil d'exécution précédent, ou la préemption par un autre fil d'exécution plus éligible.

**16.** Contrôleur de la revendication 12, dans lequel le gestionnaire de transactions exécutables comprend en outre un gestionnaire de synchronisation de transactions exécutables (310), configuré pour maintenir au moins une liste de files d'attente en suspens dans la mémoire dédiée, indiquant que des fils d'exécution dépendants attendent l'occurrence d'un événement prédéterminé, et au moins une liste de files d'attente de temporisateur dans la mémoire dédiée, indiquant les fils d'exécution en attente d'un événement de temporisation.

**17.** Contrôleur de la revendication 16, dans lequel le gestionnaire de transactions exécutables comprend en outre un gestionnaire de sortie de transactions exécutables (320) configuré pour maintenir une pluralité de structures de files d'attente de distribution dans la mémoire dédiée, indiquant que les fils d'exécution en attente d'exécution sur un élément de processeur associé des éléments de processeur, et pour maintenir une pluralité de structures de files d'attente prêtes dans la mémoire dédiée, indiquant que des fils d'exécution attendent une allocation à l'un des éléments de processeur pour y être exécutés.

**18.** Contrôleur de la revendication 17, dans lequel le gestionnaire de transactions exécutables comprend en outre un gestionnaire d'ordonnancement de transactions exécutables (330), configuré pour fournir et maintenir des décisions d'ordonnancement afin de donner la priorité à la distribution de fils d'exécution à partir des files d'attente prêtes à la file d'attente de distribution pour chaque élément de processeur.

**19.** Contrôleur de l'une des revendications précédentes, dans lequel la logique de commande comprend en outre un gestionnaire d'interface système (380), en communication avec le gestionnaire de transactions exécutables, et configuré pour gérer l'accès par le contrôleur au processeur multicoeur.

**20.** Contrôleur de la revendication 19, dans lequel le gestionnaire d'interface système est agencé pour fournir une interface d'interconnexion et un accès de configuration et d'exécution audit gestionnaire de transactions exécutables.

**21.** Contrôleur de la revendication 6, dans lequel la logique de commande comprend en outre un gestionnaire d'interruptions système (350), destiné à convertir des interruptions système dans un premier format utilisé dans le processeur multicoeur, en interruptions de contrôleur dans un deuxième format différent, lequel deuxième format est compréhensible par le gestionnaire de transactions exécutables.

**22.** Processeur multicoeur comprenant le contrôleur de l'une des revendications précédentes, le processeur multicoeur ayant une pluralité d'éléments de processeur interconnectés (150), et au moins un client de contrôleur (120), dans lequel le client de contrôleur est configuré pour commander des communications entre les éléments de traitement et le reste du processeur multicoeur, en fonction des signaux de commande provenant du contrôleur.

**23.** Processeur multicoeur de la revendication 22, dans lequel chacun de la pluralité d'éléments de processeur interconnectés (150) a un client de contrôleur associé (120), dans lequel chaque client de contrôleur est configuré pour commander des communications entre l'élément de traitement respectif et le reste du processeur multicoeur, en fonction des signaux de commande provenant du contrôleur.

**24.** Processeur multicoeur de la revendication 22, comprenant en outre une interconnexion de système partagée (160) accessible à la fois au contrôleur et à la pluralité d'éléments de processeur interconnectés.

**25.** Processeur de la revendication 24, comprenant en outre une interface externe, pour connecter ledit processeur multicoeur à un ou plusieurs dispositifs externes.

**26.** Processeur multicoeur tel que revendiqué dans l'une des revendications 22 à 25, comprenant en outre une mémoire dédiée (190) en communication avec le contrôleur.

**27.** Processeur multicoeur de la revendication 26, dans lequel la mémoire dédiée est exclusivement accessible par le contrôleur.

**28.** Processeur multicoeur de la revendication 26, dans lequel la mémoire dédiée est accessible à la fois par le contrôleur et par au moins un autre composant du processeur multicoeur.

**29.** Processeur multicoeur de l'une des revendications 26 et 27, dans lequel la mémoire dédiée comprend une pluralité d'éléments de mémoire individuels (195).

**30.** Processeur multicoeur de la revendication 29, dans lequel le nombre d'éléments de mémoire individuels peut être défini par l'utilisateur.

**31.** Processeur multicoeur de la revendication 30, dans lequel tous les éléments de mémoire ont la même taille et le nombre d'éléments de mémoire pouvant être défini par l'utilisateur résulte en une taille de mémoire variable.

**32.** Processeur multicoeur de la revendication 22, dans lequel le client de contrôleur est une application logicielle s'exécutant sur l'élément de processeur associé.

**33.** Processeur multicoeur de la revendication 22, dans lequel le client de contrôleur est un client de contrôleur matériel, dépendant de la fonctionnalité de l'élément de processeur associé.

**34.** Processeur multicoeur de la revendication 33, dans lequel le client de contrôleur comprend en outre une logique de commande de client, pour commander l'élément de processeur associé, suite à l'activation par un signal de commande provenant dudit contrôleur.

**35.** Processeur multicoeur de la revendication 34, dans lequel le client de contrôleur comprend en outre une pluralité de mémoires tampons (510, 520) pour le stockage temporaire de messages de communication envoyés entre ledit élément de processeur et le reste du processeur multicoeur.

**36.** Processeur multicoeur de la revendication 35, dans lequel la pluralité de mémoires tampons sont des mémoires tampons premier entré premier sorti.

**37.** Processeur multicoeur de la revendication 35, dans lequel le client de contrôleur comprend en outre une pluralité d'éléments de mémoire (540, 560), étant configurés chacun pour stocker une adresse.

**38.** Processeur multicoeur de la revendication 37, dans lequel le client de contrôleur comprend en outre une pluralité de comparateurs (530), chaque comparateur étant configuré pour comparer une adresse générée par l'élément de processeur associé (540) à une adresse stockée dans l'un des éléments de mémoires.

**39.** Processeur multicoeur de la revendication 37, dans lequel le client de contrôleur comprend en outre un soustracteur (550), configuré pour soustraire une adresse stockée dans l'un des éléments de mémoire (560) à partir d'une adresse générée par l'élément de processeur associé.

**40.** Procédé de commande et d'allocation de ressources dans un processeur multicoeur ayant une pluralité d'éléments de processeur (150), dont au moins l'un est une unité de traitement maîtresse, l'unité de traitement maîtresse ayant un état maître à l'activation du processeur multicoeur pour effectuer une allocation de transactions exécutables dans le processeur multicoeur, le procédé comprenant les étapes consistant :

à adopter un état maître au niveau d'un contrôleur de gestion de ressources et d'allocation de tâches (130), logiquement séparé de l'unité de traitement maîtresse, pendant une séquence d'initialisation ;
à recevoir une transaction exécutable au niveau du contrôleur de gestion de ressources et d'allocation de tâches (130) ; et
à allouer par le contrôleur de gestion de ressources et d'allocation de tâches (130) cette transaction exécutable à l'un des éléments de processeur indépendamment de la commande d'unité de traitement maîtresse.

**41.** Procédé de la revendication 40, comprenant en outre le fait :
de diriger la transaction exécutable vers l'un des éléments de processeur par l'intermédiaire d'un client de gestion de transaction (120).

**42.** Procédé de la revendication 41, dans lequel le client de gestion de transaction est un client matériel.

**43.** Procédé de la revendication 41, dans lequel le client de gestion de transaction est un client logiciel.

**44.** Procédé de la revendication 42, comprenant en outre le stockage d'une adresse prédéterminée dans le client de gestion de transaction.

**45.** Procédé de la revendication 44, comprenant en outre le fait :
de soustraire, au niveau du client de gestion de transaction, l'adresse prédéterminée à partir d'une adresse générée par l'élément de traitement associé pour produire une adresse normalisée.

**46.** Procédé de la revendication 44, comprenant en outre le fait de comparer, au niveau du client de gestion de transaction, une adresse générée par l'élément de processeur associé à l'adresse prédéterminée stockée ; et
de configurer l'élément de processeur associé en fonction du résultat de la comparaison.

**47.** Procédé de la revendication 42, comprenant en outre le fait de stocker, au niveau du client de gestion de transaction, la totalité d'un message de communication provenant du reste du processeur multicoeur à un élément de processeur associé ; et
de transmettre, ensuite, la totalité du message à l'élément de processeur associé.

**48.** Procédé de la revendication 42, comprenant en outre le fait de diffuser en continu, au niveau du client de gestion de transaction, des messages de communication provenant du reste du processeur multicoeur à l'élément de processeur associé.

**49.** Procédé de la revendication 41, comprenant en outre la création, l'exécution ou la suppression d'une transaction exécutable pour un premier client de gestion de transaction, avec un deuxième client de gestion de transaction.

**50.** Procédé de l'une des revendications 40 à 49, comprenant en outre l'allocation de la transaction exécutable à l'un des éléments de traitement sur la base d'un ensemble prédéfini de paramètres d'ordonnancement.

**51.** Procédé de la revendication 50, dans lequel l'ensemble de paramètres d'ordonnancement peut être défini par l'utilisateur.

**52.** Procédé de la revendication 50 ou 51, comprenant en outre le fait :
de surveiller une liste des paramètres d'ordonnancement à utiliser par le contrôleur.

**53.** Procédé de l'une des revendications 50 à 52, comprenant en outre la modification de l'ensemble de paramètres d'ordonnancement dans le temps.

**54.** Procédé de la revendication 52, dans lequel l'étape de surveillance de la liste des paramètres d'ordonnancement comprend en outre le maintien d'une liste de tâches prêtes pouvant être exécutées par l'un ou plusieurs des éléments de processeur.

**55.** Procédé de l'une des revendications 50 à 53, comprenant en outre l'allocation de la transaction exécutable à l'un des éléments de traitement sur la base de la nécessité d'équilibrer les ressources de processeur dans le processeur multicoeur.

**56.** Procédé de l'une des revendications 50 à 53, comprenant en outre le fait d'empêcher l'allocation de la transaction exécutable à l'un des éléments de processeur, lorsqu'il est déterminé qu'il est souhaitable que cet élément de processeur exécute une tâche de priorité plus élevée.

**57.** Procédé de l'une des revendications 40 à 56, comprenant en outre le fait :
de maintenir une liste des transactions exécutables qui n'ont pas été allouées pendant une durée plus longue qu'une durée prédéterminée.

**58.** Procédé de la revendication 52, dans lequel l'étape de surveillance de la liste des paramètres d'ordonnancement comprend en outre le maintien d'une liste de tâches en suspens qui attendent un événement prédéterminé.

**59.** Procédé de la revendication 58, dans lequel l'événement prédéterminé est un événement de temporisateur, un événement de synchronisation ou les deux.

**60.** Procédé de la revendication 58, comprenant en outre le maintien d'une pluralité de listes de tâches en suspens, en fonction d'événements prédéterminés mutuellement exclusifs.

**61.** Procédé de la revendication 52, dans lequel l'étape de surveillance de la liste des paramètres d'ordonnancement comprend en outre le maintien d'une liste de tâches distribuées qui sont en attente d'exécution sur une ressource de traitement particulière.

**62.** Procédé de la revendication 61, comprenant en outre l'étape consistant à déplacer une transaction exécutable en attente d'un événement prédéterminé vers la file d'attente prête, à l'expiration d'un délai d'attente.

**63.** Procédé de l'une des revendications 40 à 62, dans lequel le contrôleur est exclusivement dédié à l'allocation de tâches.

FIG. 1

**FIG. 2**

**FIG. 3**

Tightly Coupled
Memory Interface
Group 180

100

External
Interrupt
Group
210

System
Control Group
200

System
Management
Controller
130

110

Internal
Control
Group
220

130

Bus Interface Group 130

FIG. 4

Memory Read Enable 196 →

Memory Write Enable 194 →

Memory Write Data bus 193 ⇒

Dedicated Tightly
Coupled Memory
190

195

Memory Read Data bus 192 ⇐

Memory address bus 191 ⇒

FIG. 5

FIG. 6

Processing Resource
150

Controller Client 120 ◀——INT
220

Interconnect Agent
170

Interconnect
160

FIG. 7

FIG. 7b

FIG. 8

40

| Word | BIT |||||||||||||||||||||||||||||||| |
|---|---|---|---|---|---|---|---|---|---|---|---|---|---|---|---|---|---|---|---|---|---|---|---|---|---|---|---|---|---|---|---|---|
| | 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
| 0 | RESERVED |||||||||||||||||||||||||||||||
| 1 | RESERVED |||||||||||||||||||||||||||||||
| 2 | RESERVED |||||||||||||||||||||||||| STATUS ||||||
| 3 | METRIC [1] |||||||||||||||||||||||||||||||
| 4 | METRIC [0] |||||||||||||||||||||||||||||||
| 5 | pREFERENCE |||||||||||||||||||||||||||||||
| 6 | NEXT INDEX [1] |||||||||||||||||| NEXT INDEX [0] ||||||||||||||
| 7 | PREVIOUS INDEX [1] |||||||||||||||||| PREVIOUS INDEX [0] ||||||||||||||

# FIG. 9a

| Field | Type | Description |
|---|---|---|
| Status. Type | Unsigned nibble | Determines the type of the WME |
| Status. Flags | bool [] | Type specific WME flags |
| Metric [1:0] | unsigned long [] | Scheduler Metrics |
| pReference | (void *) | A pointer to a thread control block within system memory |
| NextIndex[1:0] | unsigned short [] | Two forward pointers for autonomous linked lists |
| PreviousIndex[1:0] | unsigned short [] | Two backward pointers for autonomous linked lists |

# FIG. 9b

| Word | 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|---|---|---|---|---|---|---|---|
| | | | | | | | | | | | | | | | | | BIT | | | | | | | | | | | | | | | |
| 0 | DEPENDENCY REFERENCE | | | | | | | | | | | | | | | | | | | | | | | | | | | | | | | |
| 1 | DEPENDENDY TIMEOUT | | | | | | | | | | | | | | | | | | | | | | | | | | | | | | | |
| 2 | SCHEDULER TIER ID | | | | | | | | | | | | | | | | PENDING QUEUE ID | | | | | | | | STATUS | | | | | | | |
| 3 | METRIC [1] | | | | | | | | | | | | | | | | | | | | | | | | | | | | | | | |
| 4 | METRIC [0] | | | | | | | | | | | | | | | | | | | | | | | | | | | | | | | |
| 5 | pREFERENCE | | | | | | | | | | | | | | | | | | | | | | | | | | | | | | | |
| 6 | NEXT INDEX [1] | | | | | | | | | | | | | | | | NEXT INDEX [0] | | | | | | | | | | | | | | | |
| 7 | PREVIOUS INDEX [1] | | | | | | | | | | | | | | | | PREVIOUS INDEX [0] | | | | | | | | | | | | | | | |

# FIG. 9c

| Field | Type | Description |
|---|---|---|
| Dependancy Reference | (void *) | Optional pointer to a synchronisation primitive (mutex, semaphore etc) upon which this thread is dependant. |
| Dependancy Timeout | unsigned long | Optional timeout for synchronisation based on temporal state. |
| Scheduler Tier ID | unsigned short | Index of Weaver I memory element containing the parent scheduler to which the synchronised thread is queued. |
| Status. Type | unsigned nibble | Set to 1. |
| Status. Flags | bool [] | Work queue status flags determining the following status:<br>0: Pushed (thread has been pushed into scheduler queue)<br>1: Popped (thread has been popped from scheduler queue)<br>2: Dispatched (thread has been dispatched) |
| Metric [1:0] | unsigned long [] | Scheduler Metrics |
| pReference | (void *) | A pointer to a thread control block within system memory |
| NextIndex [1:0] | unsigned short[] | Two forward pointers for autonomous linked lists |
| PreviousIndex [1:0] | unsigned short[] | Two backward pointers for autonomous linked lists |

# FIG. 9d

| Word\BIT | 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|---|---|---|---|---|---|---|---|
| 0 | HEAD INDEX ||||||||||||||||| NUMBER OF ELEMENTS ||||||||||||||||
| 1 | PARENT INDEX ||||||||||||||||| TOTAL THREAD ELEMENTS ||||||||||||||||
| 2 | Sched Push Op |||||| Sched Pop Op |||||| Metric Push Op |||||| Metric Pop Op |||||| BUNDLE LIMIT |||||||| STATUS ||||||||
| 3 | METRIC [1] ||||||||||||||||||||||||||||||||
| 4 | METRIC [0] ||||||||||||||||||||||||||||||||
| 5 | pREFERENCE ||||||||||||||||||||||||||||||||
| 6 | NEXT INDEX [1] ||||||||||||||||| NEXT INDEX [0] ||||||||||||||||
| 7 | PREVIOUS INDEX [1] ||||||||||||||||| PREVIOUS INDEX [0] ||||||||||||||||

## FIG. 9e

| Field | Type | Description |
|---|---|---|
| Head Index | unsigned short | The head index of the underlying queue structure. |
| Number of Elements | unsigned short | The number of elements in the immediately underlying queue structure |
| Parent Index | unsigned short | Pointer to the parent scheduler tier or dispatch queue. |
| Total Thread Elements | unsigned short | The total number of thread elements in the underlying queue structure (i.e. excluding scheduler tiers) |
| Scheduler Push Operator | unsigned char | Operator to be executed when a thread is pushed onto the scheduler tier. |
| Scheduler Pop Operator | unsigned char | Operator to be executed when a thread is popped from the scheduler tier. |
| Metric Push Operator | unsigned char | Scheduler metric propagation operator for execution when a thread is pushed onto the scheduler tier. |
| Metric Pop Operator | unsigned char | Scheduler metric propagation operator for execution when a thread is popped from the scheduler tier. |
| Parent Index | unsigned short | Pointer to the parent scheduler tier or dispatch queue. |
| Bundle Limit | unsigned char | The maximum number of threads that may be scheduled from this tier in a bundle (for memory conscious scheduling purposes) |
| Status. Type | unsigned nibble | Set to:<br>2: Dynamic scheduler tier<br>3: Locked dynamic scheduler tier<br>4: Static scheduler tier<br>5: Root scheduler tier |
| Status. Flags | bool [] | Unused |
| Metric[1:0] | unsigned long [] | Scheduler Metrics |
| pReference | (void *) | Used within dynamic scheduler tiers to identify the final thread element of the tier. |
| PreviousIndex[1] NextIndex[1] | unsigned short[] | Sub-block work queue list pointers. |
| PreviousIndex[0] NextIndex[0] | unsigned short[] | Dual attached linked list for scheduler peers. |

## FIG. 9f

| Word | BIT 31–16 | BIT 15–0 |
|---|---|---|
| 0 | PREEMPTION PRIORITY | ROOT SCHEDULER INDEX |
| 1 | NUMBER OF ELEMENTS | HEAD INDEX |
| 2 | FULL DEPTH \| PROC ELEMENT ID | STATUS |
| 3 | METRIC [1] | |
| 4 | METRIC [0] | |
| 5 | RESERVED | |
| 6 | NEXT INDEX [1] | NEXT INDEX [0] |
| 7 | PREVIOUS INDEX [1] | PREVIOUS INDEX [0] |

(Bit positions header: 31 30 29 28 27 26 | 24 23 22 21 20 19 18 17 16 | 15 14 13 12 11 10 9 | 7 6 5 4 3 2 1 0)

## FIG. 9g

| Field | Type | Description |
|---|---|---|
| Preemption Priority | unsigned short | Priority of the currently executing thread. Used to avoid priority inversion. |
| Root Scheduler Index | unsigned short | Index of the memory element containing the root scheduler at the head of the scheduling cone for this resource. |
| Number of Elements | unsigned short | The number of thread elements currently held within the dispatch queue. |
| Head Index | unsigned short | The head index of the dispatch queue. |
| Status. Type | unsigned nibble | Set to 6. |
| Status. Flags | bool [] | Work queue status flags. |
| Metric[1] | unsigned long | Power down eligibility counter. |
| Metric[0] | unsigned long | Power down eligibility thresholds. |
| PreviousIndex[1] NextIndex[1] | unsigned short[] | Sub - block work queue list pointers. |
| PreviousIndex[0] NextIndex[0] | unsigned short[] | Inter dispatch queue list pointers. |

## FIG. 9h

| Word | BIT | | | | | | | | | | | | | | | | | | | | | | | | | | | | | | | |
|------|----|----|----|----|----|----|----|----|----|----|----|----|----|----|----|----|----|----|----|----|----|----|----|----|----|----|----|----|----|----|----|----|
| | 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
| 0 | HEAD INDEX | | | | | | | | | | | | | | | | NUMBER OF ELEMENTS | | | | | | | | | | | | | | | |
| 1 | RESERVED | | | | | | | | | | | | | | | | | | | | | | | | | | | | | | | |
| 2 | RESERVED | | | | | | | | | | | | | | | | | | | STATUS | | | | | | | | | | | | |
| 3 | RESERVED | | | | | | | | | | | | | | | | | | | | | | | | | | | | | | | |
| 4 | RESERVED | | | | | | | | | | | | | | | | | | | | | | | | | | | | | | | |
| 5 | RESERVED | | | | | | | | | | | | | | | | | | | | | | | | | | | | | | | |
| 6 | RESERVED | | | | | | | | | | | | | | | | NEXT INDEX [0] | | | | | | | | | | | | | | | |
| 7 | RESERVED | | | | | | | | | | | | | | | | PREVIOUS INDEX [0] | | | | | | | | | | | | | | | |

# FIG. 9i

| Field | Type | Description |
|-------|------|-------------|
| Head Index | unsigned nibble | Pointer to the head index of the pending list. |
| Number of Elements | unsigned short [] | Number of pending list elements. |
| Status. Type | Unsigned nibble | Set to 7. |
| Status. Flags | bool [] | Unused |
| PreviuosIndex[0] NextIndex[0] | unsigned short [] [] | Inter pending queue list pointers. |

# FIG. 9j

| Word | BIT | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|
| | 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
| 0 | | | | | | | | | | | | | | | | | | | | | | | | | | | | | | | | |
| 1 | DEPENDENCY TIMEOUT | | | | | | | | | | | | | | | | | | | | | | | | | | | | | | | |
| 2 | | | | | | | | | | | | | | | | | | | | | | STATUS | | | | | | | | | | |
| 3 | | | | | | | | | | | | | | | | | | | | | | | | | | | | | | | | |
| 4 | METRIC [0] | | | | | | | | | | | | | | | | | | | | | | | | | | | | | | | |
| 5 | | | | | | | | | | | | | | | | | | | | | | | | | | | | | | | | |
| 6 | NEXT INDEX [1] | | | | | | | | | | | | | | | | NEXT INDEX [0] | | | | | | | | | | | | | | | |
| 7 | PREVIOUS INDEX [1] | | | | | | | | | | | | | | | | PREVIOUS INDEX [0] | | | | | | | | | | | | | | | |

# FIG. 9k

| Field | Type | Description |
|---|---|---|
| Dependency Timeout | unsigned long | Timeout for comparison with the thread currently being Inserted. |
| Type | unsigned char | Set to 8 |
| Flags | bool [] | Unused |
| Metric [1:0] | unsigned long [] [] | Scheduler Metrics |
| NextIndex[1:0] | unsigned short [] [] | Two forward pointers for autonomous linked lists |
| PreviousIndex[1:0] | unsigned short [] [] | Two backward pointers for autonomous linked lists |

# FIG. 9l

FIG. 10

FIG. 11

System management controller 130l

Scheduler Hierarchy

Thread Descriptors

Dispatch Queue #n

Dispatch Queue #m

API Interpreter (Interface Block)

(void *) pReference

Scheduler Root Nodes

Thread descriptors

System Memory 140

Controller Client Control Block 125

Processing Resource Type 1 Instruction Block 145a

Processing Resource Type 2 Instruction Block 145b

Data Block 135

Controller client 120

Processing Resource Type 1 150a

Controller client 120

Processing Resource Type 2 150b

EP 1 730 628 B1

**Pending Queue Structure**

Pending Queue #1

Pending Queue #2

Pending Queue #n

**Ready Queue Structure**

Schedule Update List Structure

Schedule Manager 330

Free List Structure

System Management Controller 130

**Dispatch Queue Structure**

**Hardware Processing Resources 150**

☐ Dynamic Scheduler Element

■ Static Scheduler Element

■ Root Scheduler Element

∿ Ready Thread

∿ Blocked Thread

▨ Dependant Thread Primitive

▨ Synchronisation Primitive

⊞ Independent Thread Primitive

▨ Interrupt Lines

⟶ Uncommitted Controller Memory Element

# FIG. 12

**FIG. 13**

FIG. 14

FIG. 15

Thread Descriptors

Dynamic Scheduler Tiers

Static Scheduler Tiers

Root #1

Root #2

Root Scheduler Tiers

FIG. 16

Thread Ready Interrupt

Power Down Interrupt

Dispatch Queue
Descriptor

#1

Thread
Descriptors

Thread
Bundle

Full Threshold

Schedule Time

# FIG. 17

(a) Scheduler thread bundle size set to 1

(b) Scheduler thread bundle size set to 4

FIG.18

EP 1 730 628 B1

FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5504670 A

**Non-patent literature cited in the description**

- **ARISON et al.** System applications of a new 32-bit floating-point DSP processor. *22ACSSC-12/88,* vol. 2, 890-897